Europäisches Patentamt

European Patent Office

Office européen des brevets

(19)

(11) EP 1 433 862 A1

(12) **EUROPEAN PATENT APPLICATION**
published in accordance with Art. 158(3) EPC

(43) Date of publication:
30.06.2004 Bulletin 2004/27

(51) Int Cl.7: C22C 1/04

(21) Application number: 02763033.4

(86) International application number:
PCT/JP2002/009502

(22) Date of filing: 17.09.2002

(87) International publication number:
WO 2003/027342 (03.04.2003 Gazette 2003/14)

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 25.09.2001 JP 2001292117
25.09.2001 JP 2001292118
27.03.2002 WOPCT/JP02/02968

(71) Applicant: Center for Advanced Science and
Technology Incubation, Ltd.
Chiyoda-ku, Tokyo 100-0005 (JP)

(72) Inventors:
• KONDOH, Katsuyoshi,
c/o The University of Tokyo
Tokyo 153-0041 (JP)

• AIZAWA, Tatsuhiko
Komae-shi, Tokyo 201-0004 (JP)
• OGINUMA, H.,
c/o Musashi Institute of Technology
Tokyo 158-0087 (JP)
• YUASA, Eiji,c/o Musashi Institute of Technology
Tokyo 158-0087 (JP)

(74) Representative:
Kirschner, Klaus Dieter, Dipl.-Phys.
Böck, Tappe, Kirschner
Rechtsanwälte - Patentanwälte
Sollner Strasse 38
81479 München (DE)

(54) **MAGNESIUM BASE COMPOSITE MATERIAL**

(57) The present invention provides a magnesium-base composite material capable of suppressing coarse growth of a crystal particle size of a magnesium matrix and $Mg_2Si$ particles, thereby providing excellent mechanical properties such as strength and hardness, and a manufacturing method thereof. The manufacturing method includes the steps of: blending matrix powder containing Mg and Si powder to obtain a blended matter; applying a plasticization treatment to the resulting blended matter to form a solid body; heating the solid body to allow Mg and Si to react with each other to form a heat solid body containing $Mg_2Si$; and applying a warm plasticization treatment to the heat solid body. Thus, it is possible to provide a magnesium-base composite material having a tensile strength from not less than 100 MPa to not more than 500 MPa.

FIG. 3

**Description**

<u>Technical Field</u>

The present invention relates to a magnesium-base composite material having excellent mechanical properties, such as high tensile strength and high hardness, and high rigidity if desired, as well as excellent corrosion resistance, and a manufacturing method thereof.

<u>Background Art</u>

Conventionally, with respect to a magnesium-base composite material in which magnesium silicide ($Mg_2Si$) grains are dispersed, various studies and researches have been vigorously conducted. For example, Japanese Patent Laying-Open No. 6-81068 has disclosed a manufacturing method of a magnesium-base composite material in which upon injection-molding magnesium alloy containing a large amount of Si component in a semi-molten state, an Mg matrix and Si are allowed to react with each other to synthesize $Mg_2Si$ and these $Mg_2Si$ grains are dispersed.

Moreover, Japanese Patent Laying-Open No. 8-41564 has disclosed a magnesium-base composite material obtained by a casting method in which $Mg_2Si$ grains and SiC grains are dispersed. Furthermore, Japanese Patent Laying-Open No. 2000-17352 has disclosed a magnesium-base composite material in which spherical $Mg_2Si$ grains are dispersed, and a casting method thereof.

<u>Disclosure of the Invention</u>

However, any of these manufacturing methods relating to the magnesium-base composite material are based on dissolving methods such as a casting method and an impregnating method. In other words, in these methods, magnesium or magnesium alloy, constituting a matrix, is once dissolved, and then subjected to coagulating and solidifying processes. Consequently, a coarse growth in the crystal grains size of the magnesium matrix and $Mg_2Si$ grains is observed, and subsequent degradation in mechanical properties such as strength and hardness is observed.

Moreover, the above-mentioned manufacturing methods based on the dissolving method are inevitably susceptible to an increase in energy consumption, resulting in problems with costs.

Furthermore, there have been strong demands for light-weight products in structural machining parts such as motorcycle parts, car parts and electric appliance parts, and welfare caring products such as wheel chairs and caring beds, and Mg alloy has been applied to these products. However, in order to apply Mg alloy to these parts and products, it is necessary to greatly improve the corrosion resistance of the Mg alloy and, in particular, mechanical properties thereof, such as tensile strength, hardness and rigidity (Young's Modulus).

It is an object of the present invention to provide a magnesium-base composite material capable of suppressing the coarse growth of a crystal grains size of a magnesium matrix and $Mg_2Si$ grains, thereby providing excellent mechanical properties such as strength and hardness and high corrosion resistance.

Moreover, in addition to the above-mentioned object, it is another object of the present invention to provide a manufacturing method for a magnesium-base composite material which provides reduced costs lower than those of the above-mentioned dissolving methods.

Furthermore, in addition to the above-mentioned objects, it is still another object of the present invention to provide a precursor of the magnesium-base composite material, and a manufacturing method thereof.

Furthermore, in addition to the above-mentioned objects, it is yet another object of the present invention to provide a Mg-base composite material having improved mechanical properties, such as, in particular, strength and hardness, and rigidity (Young's Modulus) if necessary as well as corrosion resistance, and a manufacturing method thereof.

After extensive research efforts, the present inventors have found that it is possible to achieve the above-mentioned objects by using a manufacturing method of a magnesium-base composite material based on a powder metallurgical method without depending on the conventional cast-dissolving method.

In one aspect of the present invention, the present inventors have found that, during a process of press-forming mixed powder of matrix powder containing Mg and Si powder, an oxidized coat film (MgO) on the Mg-powder surface is mechanically broken and separated to form active Mg newly-generated faces so that the contact area to the Si powder is increased to allow the reaction between the two materials to progress in a solid-phase temperature range of not more than the melting point of Mg. On the basis of this knowledge, they have found that, by dispersing Si powder in the surface and/or the inside of the matrix powder containing Mg, it is possible to form a state where the Si powder and the matrix powder containing Mg are made in closely contact with each other without MgO being located therebetween and, consequently, to allow the reaction between Mg and Si to progress easily.

Moreover, the present inventors have found that the product obtained from the above-mentioned reaction in a solid-phase temperature range not more than the melting point of Mg is further subjected to a warm plasticization treatment, so that it becomes possible to provide an Mg-base composite material having improved mechanical properties, such as, in particular, strength and hardness, and rigidity (Young's Modulus) if necessary as well as corrosion resistance.

More specifically, the present inventors have devised the following inventions:

<1> A manufacturing method of a magnesium-base composite material, comprising the steps of: preparing mixed powder by blending matrix powder containing magnesium (Mg) and silicon (Si) powder; filling a container with the mixed powder and applying a pressure to the powder to form a compressed powder molded body having a void content of not more than 35%; and heating and maintaining the compressed powder molded body in an inert gas atmosphere or in a vacuum so that Mg in the matrix powder and Si powder are allowed to react to produce magnesium silicide ($Mg_2Si$).

<2> Preferably, in the above-mentioned method <1>, $Mg_2Si$ is dispersed in the magnesium-base composite material.

<3> Preferably, in the preparation step of the above-mentioned method <1> or <2>, a ratio of (weight of Si powder) /(weight of Mg in matrix powder) is set to not more than 36.6/63.4, more preferably not more than 10/90.

<4> Preferably, in any of the above-mentioned method <1> to <3>, a heating temperature is set to not less than 350°C.

<5> Preferably, in any of the above-mentioned method <1> to <4>, $Mg_2Si$ is set to not less than 3 wt%, more preferably not less than 5 wt%, with respect to 100 wt% of the magnesium-base composite material.

<6> A magnesium-base composite material precursor formed by blending matrix powder containing magnesium (Mg) and silicon (Si) powder, the magnesium-base composite material precursor having a void content of not more than 35%.

<7> Preferably, in the above-mentioned precursor <6>, the precursor has a heat-generating peak, derived from $Mg_2Si$, of 150 to 650°C, more preferably 350 to 650°C, in differential scanning calorimetry (DSC) measurements.

<8> Preferably, in the above-mentioned precursor <6> or <7>, the precursor has a ratio of (weight of Si powder)/ (weight of Mg in the matrix powder) of not more than 36.6/63.4.

<9> A magnesium-base composite material precursor formed by blending matrix powder containing magnesium (Mg) and silicon (Si) powder, the precursor having a heat-generating peak, derived from $Mg_2Si$, of 150 to 650°C, more preferably 350 to 650°C, in differential scanning calorimetry (DSC) measurements.

<10> Preferably, in the above-mentioned precursor <6>, the precursor has a ratio of (weight of Si powder)/(weight of Mg in the matrix powder) of not more than 36.6/63.4.

<11> A manufacturing method of a magnesium-base composite material precursor, comprising the steps of: preparing mixed powder by blending matrix powder containing magnesium (Mg) and silicon (Si) powder; and filling a container with the mixed powder and applying a pressure to the powder to form a magnesium-base composite material precursor having a void content of not more than 35%.

<12> Preferably, in the preparation step in the above-mentioned method <11>, a ratio of (weight of Si powder)/ (weight of Mg in matrix powder) is set to not more than 36.6/63.4, more preferably not more than 10/90.

<13> A magnesium-base composite material formed by dispersing magnesium silicide ($Mg_2Si$) in a matrix containing magnesium (Mg), the magnesium-base composite material having at least one kind of characteristics selected from the following groups (A) and (B):

(A) the magnesium-base composite material has a Rockwell hardness (E scale) of not less than 40 to not more than 105, more preferably not less than 40 to not more than 95, and/or the magnesium-base composite material has a Rockwell hardness (E scale) greater than that of a matrix material of the magnesium-base composite material except the magnesium silicide by a value of not less than 20 to not more than 80, more preferably not less than 20 to not more than 40; and

(B) the magnesium-base composite material has a tensile strength of not less than 100 MPa to not more than 350 MPa, more preferably not less than 100 MPa to not more than 280 MPa, and/or the magnesium-base composite material has a tensile strength greater than that of the above-mentioned matrix material by a value of not less than 20 MPa to not more than 100 MPa, more preferably not less than 20 MPa to not more than 50 MPa.

<14> Preferably, in the above-mentioned material <13>, $Mg_2Si$ is set to not less than 3 wt%, more preferably not less than 5 wt%, with respect to 100 wt% of the magnesium-base composite material.

<15> A manufacturing method of a magnesium-base composite material comprising the steps of: preparing composite powder by blending matrix powder containing magnesium (Mg) and silicon (Si) powder so that Si is dispersed in the matrix powder; and heating and maintaining the composite powder in an inert gas atmosphere or in a vacuum to form magnesium silicide ($Mg_2Si$).

<16> Preferably, in the above-mentioned method <15>, after the preparation step, a step of forming a compressed powder molded body by filling a container with the above-mentioned composite powder so as to apply a pressure thereto is further included, and a step of heating and maintaining the compressed powder molded body to form magnesium silicide ($Mg_2Si$) is further included.

<17> Preferably, in the above-mentioned method <15> or <16>, $Mg_2Si$ is dispersed in the magnesium-base composite material.

<18> Preferably, in any of the above-mentioned method <15> to <17>, the preparation step includes the steps of: (a) obtaining blended powder by blending the Si powder and the matrix powder; and (b) grinding and/or press-bonding and/or crushing the blended powder.

<19> Preferably, in the above-mentioned method <18>, the preparation step repeatedly performs the (b) step a plurality of times.

<20> Preferably, in the above-mentioned method <18> or <19>, the (b) step in the preparation step is performed by using a grinder.

<21> Preferably, in the above-mentioned method <20>, the grinder has a mechanical grinding capability using impact energy generated by ball media.

<22> Preferably, in the above-mentioned method <20> or <21>, the grinder is selected from the group consisting of a rotary ball mill, a vibration ball mill and a planetary-gear ball mill.

<23> Preferably, in any of the above-mentioned method <15> to <22>, in the preparation step, a ratio of (weight of Si powder)/(weight of Mg in matrix powder) is set to not more than 36.6/63.4.

<24> Preferably, in any of the above-mentioned method <15> to <23>, the heating temperature is set to 150°C to 650°C, more preferably not less than 150°C to not more than 350°C.

<25> Preferably, in any of the above-mentioned method <15> to <24>, $Mg_2Si$ is set to not less than 3 wt%, more preferably not less than 5 wt%, with respect to 100 wt% of the magnesium-base composite material.

<26> A magnesium-base composite material precursor formed by blending matrix powder containing magnesium (Mg) and silicon (Si) powder so that the Si powder is dispersed in the matrix powder.

<27> Preferably, in the above-mentioned precursor <26>, the precursor has a heat-generating peak, derived from $Mg_2Si$, of 150 to 650°C, more preferably 150 to 350°C, in differential scanning calorimetry (DSC) measurements.

<28> Preferably, in the above-mentioned precursor <26> or <27>, the precursor has a ratio of (weight of Si powder) /(weight of Mg in the matrix powder) of not more than 36.6/63.4.

<29> A magnesium-base composite material precursor formed by blending matrix powder containing magnesium (Mg) and silicon (Si) powder, the magnesium-base composite material precursor having a heat-generating peak, derived from $Mg_2Si$, of 150 to 650°C, more preferably 150 to 350°C, in differential scanning calorimetry (DSC) measurements.

<30> Preferably, in the above-mentioned precursor <29>, the precursor has a ratio of (weight of Si powder)/(weight of Mg in the matrix powder) of not more than 36.6/63.4.

<31> A manufacturing method of a magnesium-base composite material precursor, comprising the steps of: preparing composite powder by blending matrix powder containing magnesium (Mg) and silicon (Si) powder so that Si is dispersed in the matrix powder; and filling a container with the composite powder and applying a pressure to the powder to form a magnesium-base composite material precursor.

<32> Preferably, in the above-mentioned method <31>, the preparation step includes the steps of: (a) obtaining blended powder by blending the Si powder and the matrix powder; and (b) grinding and/or press-bonding and/or crushing the blended powder.

<33> Preferably, in the above-mentioned method <32>, the preparation step repeatedly performs the (b) step a plurality of times.

<34> Preferably, in the above-mentioned method <32> or <33>, the (b) step in the preparation step is performed by using a grinder.

<35> Preferably, in the above-mentioned method <34>, the grinder has a mechanical grinding capability using impact energy generated by ball media.

<36> Preferably, in the above-mentioned method <34> or <35>, the grinder is selected from the group consisting of a rotary ball mill, a vibration ball mill and a planetary-gear ball mill.

<37> Preferably, in any of the above-mentioned method <31> to <36>, in the preparation step, a ratio of (weight of Si powder)/(weight of Mg in matrix powder) is set to not more than 36.6/63.4.

<38> A magnesium-base composite material formed by dispersing magnesium silicide ($Mg_2Si$) in a matrix containing magnesium (Mg), the magnesium-base composite material having at least one kind of characteristics selected from the following groups (A) and (B):

(A) the magnesium-base composite material has a Rockwell hardness (E scale) of not less than 40 to not more than 105, more preferably not less than 40 to not more than 95, and/or the magnesium-base composite material has a Rockwell hardness (E scale) greater than that of a matrix material of the magnesium-base composite material except the magnesium silicide by a value of not less than 20 to not more than 80, more preferably not less than 20 to not more than 40; and

(B) the magnesium-base composite material has a tensile strength of not less than 100 MPa to not more than 350 MPa, more preferably not less than 100 MPa to not more than 280 MPa, and/or the magnesium-base composite material has a tensile strength greater than that of the above-mentioned matrix material by a value of not less than 20 MPa to not more than 100 MPa, more preferably not less than 20 MPa to not more than 50 MPa.

<39> Preferably, in the above-mentioned material <38>, $Mg_2Si$ is set to not less than 3 wt%, more preferably not less than 5 wt%, with respect to 100 wt% of the magnesium-base composite material.

<40> A magnesium-base composite material formed by dispersing magnesium silicide ($Mg_2Si$) in a matrix containing magnesium (Mg), the magnesium-base composite material having an amount of Si of not less than 2 parts by weight to not more than 10 parts by weight, more preferably not less than 2.5 parts by weight to not more than 6 parts by weight and an amount of $Mg_2Si$ of not less than 3 parts by weight to not more than 27.5 parts by weight, more preferably not less than 6.8 parts by weight to not more than 15 parts by weight, with respect to 100 parts by weight of the magnesium-base composite material, and having a tensile strength of not less than 100 MPa to not more than 500 MPa.

<41> Preferably, in the above-mentioned material <40>, $Mg_2Si$ is dispersed in the composite material as grains, and has a grain size of not less than 10 nm to not more than 30 $\mu$m.

<42> Preferably, in the above-mentioned material <41>, $Mg_2Si$ has a grain size of not less than 100 nm to not more than 10 $\mu$m.

<43> Preferably, in any of the above-mentioned material <40> to <42>, the magnesium-base composite material further contains magnesium oxide (MgO) and/or silica ($SiO_2$).

<44> Preferably, in any of the above-mentioned material <40> to <43>, the magnesium-base composite material has a Micro Vickers hardness (Hv) of 80 to 125, more preferably 80 to 110, still more preferably 85 to 105.

<45> Preferably, in any of the above-mentioned material <40> to <44>, the magnesium-base composite material has a Rockwell hardness (E scale) (HRE) of 40 to 120, more preferably 80 to 105.

<46> Preferably, in any of the above-mentioned material <40> to <45>, the magnesium-base composite material has a rigidity of 47 to 65 GPa, more preferably 48 to 55 GPa.

<47> A magnesium-base composite material formed by dispersing magnesium silicide ($Mg_2Si$) in a matrix containing magnesium (Mg), the magnesium-base composite material having an amount of Si of not less than 2 parts by weight to not more than 10 parts by weight, more preferably not less than 2.5 parts by weight to not more than 6 parts by weight and an amount of $Mg_2Si$ of not less than 3 parts by weight to not more than 27.5 parts by weight, more preferably not less than 6.8 parts by weight to not more than 15 parts by weight, with respect to 100 parts by weight of the magnesium-base composite material, and having a tensile strength of greater than 350 MPa to not more than 500 MPa, more preferably 380 to 450 MPa.

<48> Preferably, in the above-mentioned material <47>, $Mg_2Si$ is dispersed in the composite material as grains, has a grain size of not less than 10 nm to not more than 30 $\mu$m.

<49> Preferably, in the above-mentioned material <48>, $Mg_2Si$ has a grain size of not less than 100 nm to not more than 10 $\mu$m.

<50> Preferably, in any of the above-mentioned material <47> to <49>, the magnesium-base composite material further contains magnesium oxide (MgO) and/or silica ($SiO_2$).

<51> Preferably, in any of the above-mentioned material <47> to <50>, the magnesium-base composite material has a Micro Vickers hardness (Hv) of 80 to 125, more preferably 80 to 110, still more preferably 85 to 105.

<52> Preferably, in any of the above-mentioned material <47> to <51>, the magnesium-base composite material has a Rockwell hardness (E scale) (HRE) of 40 to 120, more preferably 80 to 105.

<53> Preferably, in any of the above-mentioned material <47> to <52>, the magnesium-base composite material has a rigidity of 47 to 65 GPa, more preferably, 48 to 55 GPa.

<54> A magnesium-base composite material formed by dispersing magnesium silicide ($Mg_2Si$) in a matrix containing magnesium (Mg), the magnesium-base composite material having at least one kind of characteristics selected from the following groups (A) and (B):

(A) the magnesium-base composite material has a Rockwell hardness (E scale) of not less than 40 to not more than 105, and/or the magnesium-base composite material has a Rockwell hardness (E scale) greater than that of a matrix material of the magnesium-base composite material except the magnesium silicide by a value of not less than 20 to not more than 80; and

(B) the magnesium-base composite material has a tensile strength of not less than 100 MPa to not more than 350 MPa, and/or the magnesium-base composite material has a tensile strength greater than that of the above-mentioned matrix material by a value of not less than 20 MPa to not more than 100 MPa.

<55> A magnesium-base composite material formed by dispersing magnesium silicide ($Mg_2Si$) in a matrix containing magnesium (Mg), the magnesium-base composite material having a tensile strength of not less than 100 MPa to not more than 350 MPa.

<56> Preferably, in the above-mentioned material <55>, the magnesium-base composite material has a Rockwell hardness (E scale) of not less than 40 to not more than 105.

<57> A magnesium-base composite material formed by dispersing magnesium silicide ($Mg_2Si$) in a matrix containing magnesium (Mg), the magnesium-base composite material having a Rockwell hardness (E scale) of not less than 40 to not more than 105.

<58> Preferably, in any of the above-mentioned material <54> to <57>, $Mg_2Si$ is set to not less than 3 wt% with respect to 100 wt% of the magnesium-base composite material.

<59> A magnesium-base composite material formed by dispersing magnesium silicide ($Mg_2Si$) in a matrix containing magnesium (Mg), the magnesium-base composite material having at least one kind of characteristics selected from the following groups (A) and (B):

(A) the magnesium-base composite material has a Rockwell hardness (E scale) of not less than 40 to not more than 95, and/or the magnesium-base composite material has a Rockwell hardness (E scale) greater than that of a matrix material of the magnesium-base composite material except the magnesium silicide by a value of not less than 20 to not more than 40; and
(B) the magnesium-base composite material has a tensile strength of not less than 100 MPa to not more than 280 MPa, and/or the magnesium-base composite material has a tensile strength greater than that of the above-mentioned matrix material by a value of not less than 20 MPa to not more than 50 MPa.

<60> A magnesium-base composite material formed by dispersing magnesium silicide ($Mg_2Si$) in a matrix containing magnesium (Mg), the magnesium-base composite material having a tensile strength of not less than 100 MPa to not more than 280 MPa.

<61> Preferably, in the above-mentioned material <60>, the magnesium-base composite material has a Rockwell hardness (E scale) of not less than 40 to not more than 95.

<62> A magnesium-base composite material formed by dispersing magnesium silicide ($Mg_2Si$) in a matrix containing magnesium (Mg), the magnesium-base composite material having a Rockwell hardness (E scale) of not less than 40 to not more than 95.

<63> Preferably, in any of the above-mentioned material <59> to <62>, $Mg_2Si$ is set to not less than 3 wt% with respect to 100 wt% of the magnesium-base composite material.

<64> Preferably, in any of the above-mentioned material <54> to <63>, $Mg_2Si$ is dispersed in the composite material as grains, and has a grains size of not less than 10 nm to not more than 30 µm.

<65> Preferably, in the above-mentioned material <64>, $Mg_2Si$ has a grain size of not less than 100 nm to not more than 10 µm.

<66> Preferably, in any of the above-mentioned material <54> to <65>, an amount of Si is set to not less than 2 parts by weight to not more than 10 parts by weight, more preferably not less than 2.5 parts by weight to not more than 6 parts by weight, with respect to 100 parts by weight of the magnesium-base composite material.

<67> Preferably, in any of the above-mentioned material <54> to <66>, an amount of $Mg_2Si$ is set to not less than 3 parts by weight to not more than 27.5 parts by weight, more preferably not less than 6.8 parts by weight to not more than 15 parts by weight, with respect to 100 parts by weight of the magnesium-base composite material.

<68> Preferably, in any of the above-mentioned material <54> to <67>, the magnesium-base composite material further contains magnesium oxide (MgO) and/or silica ($SiO_2$).

<69> Preferably, in any of the above-mentioned material <54> to <68>, the magnesium-base composite material has a Micro Vickers hardness (Hv) of 80 to 125, more preferably 80 to 110, still more preferably 85 to 105.

<70> Preferably, in any of the above-mentioned material <54> to <69>, the magnesium-base composite material has a rigidity of 47 to 65 GPa, more preferably 48 to 55 GPa.

<71> A product made of the magnesium-base composite material according to any of the above-mentioned material <40> to <70>.

<72> Preferably, in the above-mentioned product <71>, the product is selected from the group of products consisting of: a raw material, an intermediate product, a finished product and an assembled product; a part for transport equipment; a part for electric appliance; a housing product; a part for precision machine; a sports product and a weapon; a medical instrument; and a welfare caring tool. Herein, "the raw material, the intermediate product, the finished product and the assembled product" are preferably selected from the group consisting of: a raw material, an intermediate product, a finished product, an assembled product thereof and a composite product formed in combination with another raw material that are formed by various processes such as welding, fusion welding, brazing, bonding, thermal cutting, thermal processing, forging, extruding, drawing, rolling, shearing, plate molding, roll molding, form rolling, spinning, bending, leveling, high-energy speed machining, powder machining, various cutting processes and grinding processes; and a raw material, an intermediate product, a finished product, an assembled product thereof and a composite product formed in combination with another raw material that have been subjected to various surface treatments such as metal coating, chemical conversion coating, surface curing, non-metal coating and painting. The "part for transport equipment" is preferably selected from the group consisting of car and motorcycle parts selected from a transmission part, for example, a valve spool and a bearing, and an engine part, for example, a tappet, a lifter and a retainer; an interior part such as a handle; a part for railroad vehicle selected from the group consisting of a large-size screw and a large-size bolt. The "part for electric appliance" is preferably selected from the group consisting of a part for audio-visual equipment selected from the group consisting of parts of an amplifier, a video player, a cassette player, a CD player and an LD player, for example, an adjustment thumb screw, legs, a chassis and a speaker corn; a part for domestic electric appliance selected from the group consisting of washing-machine parts, for example, a casing and a washer vessel; and a sewing machine and a part for sewing machine such as an arm for sewing machine. The "housing product" is preferably selected from the group of interior products selected from the group consisting of a living-room product such as chandelier parts, illumination parts and decorative ornaments; furniture parts such as chair legs, table legs, a table plate, hinges, handles, rails, and adjusting screws for shelves. The "part for precision machine" is preferably selected from the group consisting of an optical equipment and a measuring-instrumentation part selected from the group consisting of parts of a camera, a telescope, a microscope and an electron microscope, for example, a body, a mount and a lens case; and parts for watch selected from the group consisting of parts of a wrist watch, a clock and a clock to stand on a table, for example, a body, chenille, gears and a pendulum. The "sports product and weapon" are preferably selected from the group consisting of golf club products selected from the group consisting of a shaft, a head, a toe, a heal and a sole; and bicycle products selected from the group consisting of a transmission gear, a frame and a handle. The "medical instrument" is preferably selected from the group consisting of a bed frame, a therapeutic tool part and the like. The "welfare caring tool and welfare caring tool-use parts" are preferably selected from the group consisting of a wheel chair, a caring bed, parts of these and the like.

<73> A manufacturing method of a magnesium-base composite material formed by dispersing magnesium silicide ($Mg_2Si$) in a matrix containing magnesium (Mg), comprising the steps of:

(a) blending a first material containing Mg and a second material containing Si at a predetermined ratio to prepare a blended material;
(b) performing a plastic treatment on the blended material to form a solid body;
(c) heating the solid body to allow Mg and Si to react with each other, thereby forming a heated solid body containing $Mg_2Si$; and
(d) performing a warm plasticization treatment on the heated solid body.

<74> Preferably, in the above-mentioned method <73>, the composite material has a tensile strength of not less than 100 MPa to not more than 500 MPa.

<75> Preferably, in the above-mentioned method <73>, the composite material has a tensile strength of not less than 100 MPa to not more than 350 MPa.

<76> Preferably, in the above-mentioned method <73>, the composite material has a tensile strength of greater than 350 MPa and not more than 500 MPa, more preferably 380 to 450 MPa.

<77> Preferably, in any of the above-mentioned method <73> to <76>, in the solid body forming step (b), the blended material is mixed powder of the first material and the second material, and a container is filled with the mixed powder and a pressure is applied thereto, thereby obtaining a solid body as a compressed powder molded body having a void content of not more than 35%.

<78> Preferably, in any of the above-mentioned method <73> to <76>, in the solid body forming step (b), the blended material is prepared as an aggregation of composite powder formed by dispersing Si in matrix powder containing Mg, and a container is filled with the aggregation of composite powder and a pressure is applied thereto, thereby obtaining a solid body as a compressed powder molded body.

<79> Preferably, in any of the above-mentioned method <73> to <76>, in the solid body forming step (b), after filling a metal mold or a container with the blended material, the blended material is subjected to a compressing deformation process, an extruding deformation process or a backward extruding process, or a desired combination thereof so that each material of the blended material is mixed and/or ground, and then applied a pressure thereto to obtain a solid body.

<80> Preferably, in any of the above-mentioned method <73> to <79>, in the solid body forming step (b), the blended material is subjected to a plastic treatment to form a solid body containing $Mg_2Si$ grains having a grain size of not less than 10 nm to not more than 30 $\mu$m, more preferably not more than 1 $\mu$m, or $Mg_2Si$ grains having a grain size of not less than 10 nm to not more than 30 $\mu$m, more preferably not more than 1 $\mu$m, and the second material having a grain size of not less than 10 nm to not more than 30 $\mu$m, more preferably not more than 3 $\mu$m.

<81> Preferably, in any of the above-mentioned method <73> to <80>, after the warm plasticization treatment step, (e) a step of re-heating the resulting substance is further included.

<82> Preferably, in any of the above-mentioned method <73> to <81>, the warm plasticization treatment step is performed by using a warm extruding process or a warm forging process.

<83> Preferably, in any of the above-mentioned method <73> to <81>, the warm plasticization treatment step is performed by using a warm extruding process.

<84> Preferably, in any of the above-mentioned method <73> to <81>, the warm plasticization treatment step is performed by using a warm forging process.

<85> Preferably, in any of the above-mentioned method <73> to <84>, the heating temperature in the heating step is set to not less than 150°C to less than 650°C, more preferably not less than 150°C to not more than 600°C, still more preferably not less than 150°C to not more than 520°C.

<86> Preferably, in any of the above-mentioned method <73> to <84>, the heating temperature in the heating step is set to not less than 350°C to less than 650°C, more preferably not less than 350°C to not more than 600°C, still more preferably not less than 350°C to not more than 520°C.

<87> Preferably, in any of the above-mentioned method <73> to <84>, the heating temperature in the heating step is set to not less than 150°C to less than 350°C.

<88> Preferably, in any of the above-mentioned method <81> to <87>, the heating temperature in the re-heating step is set to not less than 150°C to less than 650°C, more preferably not less than 150°C to not more than 600°C, still more preferably not less than 150°C to not more than 520°C.

<89> Preferably, in any of the above-mentioned method <81> to <87>, the heating temperature in the re-heating step is set to not less than 350°C to less than 650°C, more preferably not less than 350°C to not more than 600°C, still more preferably not less than 350°C to not more than 520°C.

<90> Preferably, in any of the above-mentioned method <81> to <87>, the heating temperature in the re-heating step is set to not less than 150°C to less than 350°C.

<91> Preferably, in any of the above-mentioned method <73> to <90>, the magnesium-base composite material has a Micro Vickers hardness (Hv) of 80 to 125, more preferably 80 to 110, still more preferably, 85 to 105.

<92> Preferably, in any of the above-mentioned method <73> to <91>, the magnesium-base composite material has a Rockwell hardness (E scale) (HRE) of 40 to 120, more preferably 80 to 105.

<93> Preferably, in any of the above-mentioned method <73> to <92>, $Mg_2Si$ contained in the magnesium-base composite material has a grain size of not less than 10 nm to not more than 30 $\mu$m.

<94> Preferably, in the above-mentioned method <93>, $Mg_2Si$ contained in the magnesium-base composite material has a grain size of not less than 100 nm to not more than 10 $\mu$m.

<95> Preferably, in any of the above-mentioned method <73> to <94>, an amount of Si contained in the magnesium-base composite material is set to not less than 2 parts by weight to not more than 10 parts by weight, more preferably not less than 2. 5 parts by weight to not more than 6 parts by weight, with respect to 100 parts by weight of the magnesium-base composite material.

<96> Preferably, in any of the above-mentioned method <73> to <95>, an amount of $Mg_2Si$ contained in the magnesium-base composite material is set to not less than 3 parts by weight to not more than 27.5 parts by weight, more preferably not less than 6.8 parts by weight to not more than 15 parts by weight, with respect to 100 parts by weight of the magnesium-base composite material.

<97> Preferably, in any of the above-mentioned method <73> to <96>, the magnesium-base composite material further contains magnesium oxide (MgO) and/or silica ($SiO_2$).

<98> Preferably, in any of the above-mentioned method <73> to <97>, the magnesium-base composite material has a rigidity of 47 to 65 GPa, more preferably 48 to 55 GPa.

Brief Description of the Drawings

Fig. 1 is a schematic view showing mixed powder in which matrix powder containing Mg and silicon Si powder are evenly mixed (one embodiment of a solid body obtained through a solid body forming step of the present invention). Fig. 2 is a graph showing results of measurements in differential scanning calorimetry (DSC) performed on a compressed powder molded body having a predetermined void content, which is one embodiment of a solid body obtained through a solid body forming step of the present invention.

Fig. 3 is a schematic view showing composite powder of the present invention in which silicon Si powder is dispersed in matrix powder containing Mg (one embodiment of a solid body obtained through a solid body forming step of the present invention).

Fig. 4 shows an image of the composite powder of the present invention observed by an optical microscope, which is one embodiment of a solid body obtained through a solid body forming step of the present invention.

Fig. 5 is a graph showing the results of DSC measurements of three samples.

Figs. 6 is a schematic diagram showing one embodiment of a solid body forming step of the present invention.

Figs. 7 is a schematic diagram showing one embodiment of a solid body forming step of the present invention.

Figs. 8(a) to 8(c) are schematic diagrams showing punches used in one embodiment of a solid body forming step of the present invention.

Best Modes for Carrying out the Invention

Hereinafter, the present invention will be described in detail.

As described above, in an aspect, the present invention has a feature of adjusting a state where Mg and Si powder are made closely into contact with each other without the presence of an oxide film on the surface of Mg contained in matrix powder, i.e., the presence of MgO, thereby easily progressing the reaction of Mg and Si.

Herein, with respect to a first aspect of the present invention, a manufacturing method of a magnesium-base composite material precursor, the resulting precursor, a manufacturing method of a magnesium-base composite material derived from the precursor, and the resulting magnesium-base composite material will be described in this order. Moreover, with respect to a second aspect of the present invention, descriptions will be also given in the same order. Furthermore, with respect to a third aspect of the present invention, descriptions will be also given in the same order; the aspect is mainly different from the other aspects in the embodiment of a solid body forming step and the embodiment of a warm plasticization treatment after heating (warm forging or warm extruding processes) in the present invention.

<Manufacturing method "A" of magnesium-base composite material precursor>

A manufacturing method of a magnesium-base composite material precursor (hereinafter, referred to as "precursor" unless otherwise indicated) of the first aspect of the present invention comprises the steps of: preparing mixed powder; and applying a pressure to the mixed powder to form a precursor.

In the preparation step for mixed powder, matrix powder containing magnesium (Mg) and silicon (Si) powder are blended so as to prepare the mixed powder.

From the viewpoint of explosion prevention such as a powder explosion, the matrix powder containing Mg is preferably prepared as powder having a grain size of not less than 10 μm. The configuration of the matrix powder containing Mg is not particularly limited as long as it satisfies this point, and it is preferably prepared as, for example, configuration such as powder, chips and small granulates.

Moreover, the matrix powder containing Mg includes an alloy containing Mg, or a material composed of Mg.

In the case where the matrix powder containing Mg is prepared as an alloy, examples of an element other than Mg to be contained therein may include Al, Zn, Mn, Zr, Ce, Li, Ag and the like, but not limited thereto.

Preferably, in a step of forming a compressed powder molded body or precursor, the Si powder has a particle size of 10 to 500 μm, more preferably 10 to 200 μm, for the purpose of improving a mechanical joining property to the matrix powder containing Mg.

Preferably, in the preparation step, a ratio of the weight of Si and the weight of Mg contained in the matrix powder, i.e., (weight of Si powder)/(weight of Mg in matrix powder) is set to not more than 36.6/63.4. The amount of Si exceeding 36.6 wt% allows all Mg in the matrix powder to become $Mg_2Si$ on principle (i.e., no Mg exists as a matrix). In this case, the resulting material is very poor in strength, failing to provide a desired property. Therefore, the ratio of (weight of Si powder)/(weight of Mg in matrix powder) is preferably set to not more than 36.6/63.4, more preferably not more than 10/90 from the viewpoint of appropriate mechanical property and cutting property.

Mixed powder is prepared by blending the above-mentioned matrix powder having Mg and silicon (Si) powder. Upon mixing, any of conventional grinders may be utilized. Examples thereof may include a V-type mixer, a ball mill and the like, but not limited thereto.

The mixing process can be performed under various environments, for example, in the air. Desirably, in the case where fine particles are used, it is preferable to prevent oxidation on the surface of powder during the mixing process by filling a mixing container with an inert gas such as nitrogen gas and argon gas.

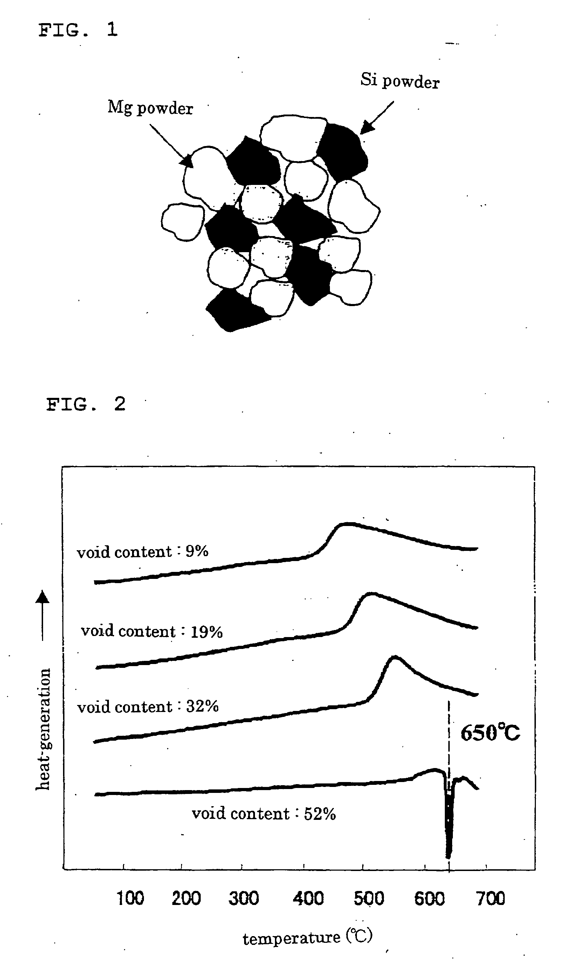

As shown in Fig. 1, the above-mentioned mixing process makes it possible to provide mixed powder in which the matrix powder containing Mg and the silicon (Si) powder are mixed evenly.

Next, a container is filled with the resulting mixed powder and a pressure is applied thereto, so that a magnesium-base composite material precursor having a void content of not more than 35% or a compressed powder molded body is formed.

As the method of applying a pressure and solidifying the powder so as to obtain the precursor or the compressed powder molded body, processes which have been used in a conventional powder metallurgy method may be adopted. Examples thereof may include a method in which a container filled with mixed powder is subjected to a cold isostatic pressing (CIP); or a method in which a mold filled with powder is compressed by upper and lower punches to form a compressed powder body, but not limited thereto.

Preferably, the resulting precursor or compressed powder molded body has a void content of not more than 35%, more preferably not more than 20%. The reason for setting the void content to this value is to obtain the following functions. In other words, in general, the surface of matrix powder is covered with an oxidized coat film (MgO). Since MgO is stable with small formation free energy, in comparison with other oxides, this MgO surface coat film suppresses the reaction between Mg and Si powder. For this reason, in conventional methods, a step of heating the powder to not less than the melting point (650°C) of Mg to generate a liquid phase of Mg is prepared, and the reaction between Mg in matrix powder and Si powder is then accelerated to synthesize $Mg_2Si$. However, in this temperature-raising step, a problem with the grain-size coarse growth in the matrix and $Mg_2Si$ has been raised similar to a casting-dissolving method.

On the other hand, in the present invention, upon performing the step of forming the precursor or compressed powder molded body, a pressure is applied to the mixed powder in a manner so as to set its void content to not more than 35%. In this step, the surface coat film of MgO is mechanically separated and fractured by surface friction due to rearrangement of particles in the powder and plastic deformation of the particles, so that an active Mg matrix newly-generated surface appears in each of the corresponding portions. By heating and applying a pressure to this Mg newly-generated surface, this surface is reacted with Si powder to synthesize $Mg_2Si$. Herein, as the value of the void content decreases, the area of the Mg newly-generated surface increases, thereby allowing the synthesizing temperature of $Mg_2Si$ to shift to the low-temperature side. Therefore, the lower the void content of the precursor or compressed powder molded body, the more preferable, and this is preferably set to not more than 20%. In contrast, if the void content of the precursor or compressed powder molded body is too great, the fracturing of the MgO coat film is insufficient, with the result that the formation area of the Mg newly-generated surface becomes too small. Consequently, the synthesizing temperature of $Mg_2Si$ needs to be set in a liquid-phase area of not less than the melting point of Mg, that is, on the high-temperature side, with the result that coarse $Mg_2Si$ grains are formed.

<Magnesium-base composite material precursor or green compact molded body "A">

In the first aspect of the present invention, the magnesium-base composite material precursor or compressed powder molded body has the above-mentioned void content. This void content is measured in the following manner.

First, the true density (A) of an element constituting the above-mentioned precursor or compressed powder molded body is found on the basis of its density, composition and component. Moreover, with respect to the resulting precursor or compressed powder molded body, its density (B) is measured in accordance with JIS R1643. By using (A) and (B), the void content (V) is found by the following equation I.

$$V = 100 - \{100 \times (B/A)\} \qquad \text{(Equation I)}$$

Herein, in the present specification, "void content" means a value found by the measuring method unless otherwise indicated.

Moreover, in the present invention, the magnesium-base composite material precursor or compressed powder molded body is preferably set to have a heat-generation peak at 150 to 650°C, more preferably 350 to 650°C, in the measurements by the differential scanning calorimetry (DSC).

For example, Fig. 2 shows the results of measurements by the differential scanning calorimetry (DSC) performed on the precursor or compressed powder molded body in the present invention, with the void content being varied. The precursors, which have void contents of 9%, 19% and 32% respectively, have heat-generation peaks in the above-mentioned range, i.e., 150 to 650°C, more preferably 350 to 650°C, with no heat-absorbing peak being observed. Herein, as will be described later, $Mg_2Si$ is synthesized through the reaction between Mg and Si in a solid phase in these heat-generation peaks.

On the other hand, in the case of the precursor having a void content of 52%, a heat-absorbing peak due to an appearance of Mg liquid phase at the melting point (650°C) of Mg. In this case, $Mg_2Si$ is synthesized in this liquid phase.

As the void content of the precursor or compressed powder molded body decreases, the temperature causing the maximum heating value (temperature of heat-generation peak), i.e., the synthesis starting temperature of $Mg_2Si$,

is shifted toward the low-temperature side. The fact that the temperature causing the maximum heating value (temperature of heat-generation peak) is lower than the melting point (650°C) of Mg indicates that the synthesizing reaction has been completed in the solid phase.

<Manufacturing method "A" of magnesium-base composite material from precursor>

The above-mentioned precursor or compressed powder molded body is heated, so that $Mg_2Si$ is formed by the reaction between Mg in the matrix powder and Si powder; thus, the magnesium-base composite material of the present invention is obtained.

Although not particularly limited, the heating atmosphere is preferably prepared as an inert gas atmosphere such as nitrogen gas or argon gas, or a vacuum state for the purpose of suppressing oxidation in Mg in the matrix (precursor or compressed powder molded body) or an Mg containing alloy.

As also shown by the results in Fig. 2, the heating temperature is preferably set to not less than 150°C, more preferably not less than 350°C, still more preferably not less than 450°C. Herein, in order to synthesize $Mg_2Si$ in a comparatively short period of time, it is preferable to set the heating temperature to not less than 450°C.

With this arrangement, upon forming a compressed powder body, the present invention makes it possible to mechanically separate and/or fracture the surface oxidized coat film (MgO), and consequently to synthesize $Mg_2Si$ at a temperature range lower than the temperature range of conventional manufacturing methods, i.e., a temperature range lower than 650°C.

<Magnesium-base composite material "A">

Thus obtained $Mg_2Si$ has the following characteristics.

The grain size of $Mg_2Si$ is 10 to 200 μm, and the $Mg_2Si$ grains are formed in a state dispersed in the resulting magnesium-base composite material.

Moreover, in general, $Mg_2Si$ has a thermal expansion coefficient smaller than that of magnesium and high rigidity and high hardness, and are also excellent in heat resistance and corrosion resistance with a low specific gravity.

Therefore, because of the above-mentioned characteristics of $Mg_2Si$, the resulting magnesium-base composite material of the present invention has excellent characteristics, such as excellent mechanical characteristics and corrosion resistance. The composite material having these excellent characteristics is preferably designed so that the amount of $Mg_2Si$ contained therein is set to not less than 3 wt%, more preferably not less than 5 wt%, with respect to 100 wt% of the composite material.

In particular, the composite material of the present invention has at least either one kind of the following properties (A) and (B) or various combined properties of not less than two kinds thereof.

In other words, (A) (i) the magnesium-base composite material has a Rockwell hardness (E scale) of not less than 40 to not more than 105, preferably from not less than 40 to not more than 95, and/or (ii) the magnesium-base composite material has a Rockwell hardness (E scale) greater than that of a matrix material of the magnesium-base composite material except the magnesium silicide by a value of not less than 20 to not more than 80, preferably not less than 20 to not more than 40; and

(B) (i) the magnesium-base composite material has a tensile strength of not less than 100 MPa to not more than 350 MPa, preferably not less than 100 MPa to not more than 280 MPa, and/or (ii) the magnesium-base composite material has a tensile strength greater than that of the matrix material by a value of not less than 20 MPa to not more than 100 MPa, preferably not less than 20 MPa to not more than 50 MPa.

More specifically, the composite material of the present invention has any characteristics satisfying (A)-(i) or (A)-(ii), or satisfying (A)-(i) as well as (A)-(ii) with respect to (A), and/or has any characteristics satisfying (B)-(i) or (B)-(ii), or satisfying (B)-(i) as well as (B)-(ii) with respect to (B). Moreover, the composite material of the present invention may have a characteristic which simultaneously satisfies any of the characteristics relating to (A) and any of the characteristics relating to (B).

<Manufacturing method "B" of magnesium-base composite material precursor>

A manufacturing method of a magnesium-base composite material precursor (hereinafter, referred to as "precursor" unless otherwise indicated) according to a second aspect of the present invention comprises the steps of: preparing composite powder; and applying a pressure to the composite powder to form a precursor.

In the preparation step of the composite powder, composite powder formed is prepared by blending matrix powder containing magnesium (Mg) and silicon (Si) powder, with Si being dispersed in the matrix powder.

The particle size and the shape of matrix powder containing Mg and Si powder are not particularly limited. This is because, as will be described later, by providing a step of mechanically and repeatedly grinding, mixing and press-bonding the both mixed powder, it is possible to form a state where Mg and Si powder are brought closely into contact with each other, irrespective of coarse powder or small pieces of material. However, with respect to the matrix powder containing Mg, the powder preferably has a particle size of not less than 10 µm from the viewpoint of prevention of powder explosion and the like. Moreover, the particle size of matrix powder containing Mg is preferably set to not less than 50 µm to not more than 700 µm, more preferably not less than 150 µm to not more than 500 µm, from the viewpoint of flowability and/or formation of the compressed powder molded body (precursor) having an even density distribution. Moreover, with respect to the configuration of matrix powder containing Mg, not particularly limited, for example, various configuration such as powder, chips or small block granulates may be used.

Moreover, the matrix powder containing Mg may include an alloy containing Mg or a material composed of Mg.

In the case where the matrix powder containing Mg is prepared as an alloy, examples of an element other than Mg to be contained therein include Al, Zn, Mn, Zr, Ce, Li, Ag and the like, but not limited thereto.

More specifically, with respect to the matrix powder containing Mg, materials such as AZ31 and AZ91 may be used.

As described above, the particle size and shape of the Si powder are not particularly limited. However, the particle size is preferably set to 10 to 500 µm, more preferably 10 to 200 µm. Moreover, in addition to a spherical shape and powder, the shape thereof is defined as chips, small granules and blocks.

In the preparation step, a ratio of the weight of Si and the weight of Mg contained in the matrix powder, i.e., (weight of Si powder)/(weight of Mg in matrix powder) is preferably set to not more than 36.6/63.4. The amount of Si exceeding 36. 6 wt% allows all Mg in the matrix powder to become $Mg_2Si$ on principle (i.e., no Mg exists as a matrix). In this case, the resulting material is very poor in strength, failing to provide a desired property. Therefore, the ratio of (weight of Si powder)/(weight of Mg in matrix powder) is preferably set to not more than 36.6/63.4, more preferably not more than 10/90 from the viewpoint of appropriate mechanical property and cutting property.

The matrix powder containing Mg and silicon (Si) powder are blended to prepare composite powder in which Si is dispersed in the matrix powder.

Herein, the preparation step preferably includes the steps of: (a) blending Si powder and matrix powder to obtain blended powder; and (b) grinding and/or press-bonding and/or crushing the resulting blended powder. Moreover, the (b) step is preferably repeatedly performed a plurality of times.

In the (b) step, a grinder is preferably used. The grinder preferably has a mechanical grinding capability using impact energy generated by ball media. The grinder is preferably selected from the group consisting of a rotary ball mill, a vibration ball mill and a planetary-gear ball mill. By performing such mechanical grinding, mixing, press-bonding and crushing processes, Si powder is finely ground, and dispersed in the matrix powder. With this arrangement, the specific surface area of the Si particles is increased and the contact area to Mg is further increased; thus, it becomes possible to further accelerate the reaction between Si and Mg.

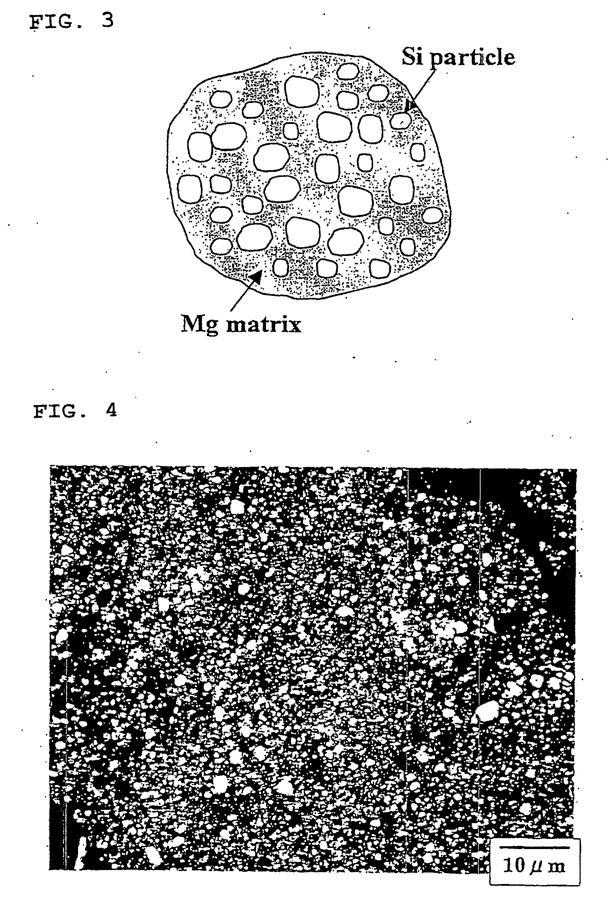

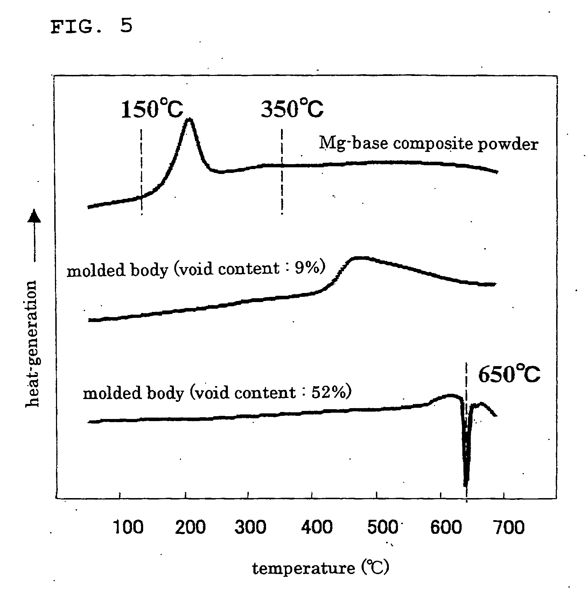

Fig. 3 is a schematic view showing a composite powder sample obtained by this preparation step, and Fig. 4 shows an image observed by an optical microscope of a composite powder sample actually obtained by the preparation step.

Fig. 3 shows that Si particles are dispersed in the matrix. Similarly, Fig. 4 also shows that Si particles (white color) are dispersed in the matrix (black background).

Herein, the preparation step may be performed in various environments such as in the air. From the viewpoint of suppression of oxidation, the step is desirably performed under an inert gas atmosphere such as nitrogen gas and argon gas.

Next, a container is filled with the resulting composite powder and a pressure is applied thereto, thereby obtaining a compressed powder molded body or a magnesium-base composite material precursor.

As the method of applying a pressure and for solidifying the powder so as to obtain the precursor or the compressed powder molded body, processes which have been used in a conventional powder metallurgy method may be adopted. For example, a method in which a container is filled with mixed powder, thereby performing a cold isostatic pressing (CIP) thereon; or a method in which a mold is filled with powder and is compressed by upper and lower punches to form a compressed powder body may be used, but not limited thereto.

The pressure at the time of the filling and pressure-applying step is preferably set to not less than 4 t/cm$^2$ to not more than 8 t/cm$^2$. The upper limit of the pressure is set because of the following reasons. In other words, even when a high pressure is applied, only small effects are obtained in an increase in the density of the finally obtained composite material. Moreover, when a high pressure is applied, agglutination occurs between the metal mold and the molded body to be used, resulting in degradation in the service life of the metal mold; therefore, this is not preferable.

<Magnesium-base composite material precursor or compressed powder molded body "B">

Through the above-mentioned preparation step and filling and pressure-applying step, it is possible to form the magnesium-base composite material precursor or the compressed powder molded body of the present invention.

Moreover, in the present invention, the magnesium-base composite material precursor or compressed powder molded body preferably has a heat-generation peak, derived from the synthesizing reaction of $Mg_2Si$, of 150 to 650°C, more preferably 150 to 350°C, in the measurements by the differential scanning calorimetry (DSC).

For example, Fig. 5 shows the results of DSC measurements of the following three samples. (1) With respect to the matrix powder containing Mg, 63.4 g of pure Mg (particle size: 111 μm) and 36.6 g of Si powder (particle size: 38 μm) are ground, mixed, press-bonded and crushed for 2 hours in a ball mill to prepare composite powder in which fine Si particles are dispersed in a matrix of Mg powder. This powder is used as a sample of the present invention in a powder state without making a compressed powder molded body. (2) The same components as the sample (1) are simply mixed, and a pressure of 5.8 $t/cm^2$ is applied thereto to obtain a sample (void content: 9%). (3) The same components as the samples (1) and (2) are simply mixed, and a pressure of 1.8 $t/cm^2$ is applied thereto to obtain a sample (void content: 52%).

As indicated by Fig. 5, in the sample (1), a heat generation peak derived from the synthesizing reaction of $Mg_2Si$ was observed in the vicinity of 150°C to the vicinity of 200°C, although it was maintained in a powder state without being subjected to a molding process for making the compressed powder body. In contrast, in the sample (2), a heat generation peak derived from the synthesizing reaction of $Mg_2Si$ was observed in the vicinity of 500°C. Moreover, in the sample (3), a heat absorbing peak derived from the melting point of Mg was observed at 650°C (melting point of Mg). These facts indicate that in the sample (1), $Mg_2Si$ is synthesized at not more than the melting point of Mg on an extremely lower temperature side in comparison with the sample (2).

<Manufacturing method "B" of magnesium-base composite material from precursor>

The above-mentioned precursor or compressed powder molded body is heated, so that Mg in the matrix powder and Si powder are allowed to react with each other to form $Mg_2Si$, thereby obtaining the magnesium-base composite material of the present invention.

Although not particularly limited, the heating atmosphere is preferably prepared as an inert gas atmosphere such as nitrogen gas or argon gas, or a vacuum state for the purpose of suppressing oxidation in Mg in the matrix (precursor or compressed powder molded body) or an Mg containing alloy.

As indicated by the results of DSC in the above-mentioned Fig. 5, the heating temperature is preferably set to not less than 150°C to not more than 350°C. In order to synthesize $Mg_2Si$ in a comparatively short period of time, the heating temperature is desirably set to not less than 200°C.

Herein, depending on the shape and dimension of the precursor or compressed powder molded body, a predetermined temperature is preferably maintained for a predetermined period of time. In particular, during the heating process, it is preferable to prevent the $Mg_2Si$ grains from causing irregularities due to a temperature difference between the surface layer portion and the inner portion of the precursor or the compressed powder molded body. Moreover, it is preferable to lengthen the maintaining time so as to suppress the coarse growth of the $Mg_2Si$ grains and Mg crystal grains. Although it depends on the shape and dimension of the precursor or the compressed powder molded body, the maintaining time is preferably set to not more than 1 minute to not less than 30 minutes.

In the magnesium-base composite material of the present invention, a plastic treatment process, such as a warm forging method and a warm extrusion method, is preferably further included. Thus, voids in the material are closed so that it is possible to increase the density of the composite material, and consequently to further improve the mechanical characteristics thereof. More specifically, for example, a method in which the composite material immediately after the heating step is directly subjected to a warm plasticization treatment and a method in which, after the heating step, the composite material is again heated, and then subjected to a warm plasticization treatment, are listed. However, from the viewpoint of economical efficiency, the former method is more advantageous.

<Magnesium-base composite material "B">

Thus obtained $Mg_2Si$ has the following characteristics.

The grain size of $Mg_2Si$ is set to 10 to 200 μm with the $Mg_2Si$ grains being formed in a dispersed state in the resulting magnesium-base composite material.

Moreover, in general, $Mg_2Si$ has a thermal expansion coefficient smaller than that of magnesium and high rigidity and high hardness, and are also excellent in heat resistance and corrosion resistance with a low specific gravity.

Therefore, because of the above-mentioned characteristics of $Mg_2Si$, the resulting magnesium-base composite material of the present invention has excellent characteristics, such as excellent mechanical characteristics and corrosion resistance. The composite material having these excellent characteristics is preferably designed so that the amount of $Mg_2Si$ contained therein is set to not less than 3 wt%, more preferably not less than 5 wt%, with respect to 100 wt% of the composite material.

In particular, the composite material of the present invention has at least either one kind of the following properties (A) and (B) or various combined properties of not less than two kinds thereof.

Herein, in the present invention, the tensile strength can be measured by using a method in accordance with Japanese Industrial Standard (JIS). Moreover, the tensile strength can also be measured by a method which will be described in examples. In other words, the tensile strength is measured in the following manner: test pieces, each having a diameter of $\phi$3. 5 mm and a parallel portion of 14 mm, are prepared, and each test piece is attached to a 10 ton autograph, and a tensile load is applied thereto at a shifting speed of 0.5 mm/min to perform a tensile test; thus, a value obtained by dividing the load at which the test piece has been ruptured by the rupture area of the sample may be measured as the tensile strength.

By using the manufacturing method, i.e., the powder metallurgy method, of the present invention, it becomes possible to synthesize $Mg_2Si$ in a solid phase without causing a liquid phase of Mg to appear. Consequently, Mg in the matrix is allowed to have fine crystal grains with $Mg_2Si$ being also finely dispersed in the matrix so that it becomes possible to prepare a magnesium-base composite material having the above-mentioned excellent characteristics, such as excellent mechanical characteristics and corrosion resistance, with high economical efficiency.

Herein, the resulting composite material and the precursor or compressed powder molded body have a small dimensional variation since they are manufactured through processes having no liquid phase of Mg. Therefore, the small dimensional variation between the precursor and the composite material (i.e., final product) forms one of advantages that is different from those of conventional methods.

<Manufacturing method "C" of magnesium-base composite material and magnesium-base composite material "C">

According to a third aspect of the present invention, there is provided a magnesium-base composite material C and a manufacturing method C thereof, which will be described below.

In the magnesium-base composite material C according to the third aspect of the present invention, magnesium silicide ($Mg_2Si$) is dispersed in the matrix containing magnesium (Mg), and the amount of Si is set to not less than 2.5 parts by weight to not more than 10 parts by weight and the amount of $Mg_2Si$ is set to not less than 3 parts by weight to not more than 27.5 parts by weight, with respect to 100 parts by weight of the magnesium-base composite material, and the tensile strength of the magnesium-base composite material is set to not less than 100 MPa to not more than 500 MPa.

The magnesium-base composite material contains magnesium silicide ($Mg_2Si$) and magnesium (Mg) serving as a matrix. The material may be composed of these two components, or may contain other components. With respect to the other components, magnesium oxide (MgO), silica ($SiO_2$) and various components used for manufacturing the material are listed. However, the other components to be added may not impair the above-mentioned characteristics, e.g., the tensile strength. Moreover, the other components to be added may not impair characteristics such as hardness (Micro Vickers hardness and/or Rockwell hardness (E scale)), which will be described later, rigidity and corrosion resistance.

The magnesium-base composite material of the present invention preferably contains Si the amount of which is set to not less than 2 parts by weight to not more than 10 parts by weight, more preferably not less than 2.5 parts by weight to not more than 6 parts by weight, with respect to 100 parts by weight of the material. Herein, in the case of the composite material containing $SiO_2$ also, the Si amount is set in the same manner. When the Si amount is too small, the composite material tends to fail to exert desired characteristics, in particular, mechanical characteristics. In contrast, when the Si amount is too great, the characteristic values, in particular, mechanical characteristic values tend to be saturated. Moreover, if the Si amount is too great, the resulting composite material tends to have degradation in the toughness.

The magnesium-base composite material of the present invention preferably contains $Mg_2Si$ the amount of which is set to not less than 3 parts by weight to not more than 27.5 parts by weight, more preferably not less than 6.8 parts by weight to not more than 15 parts by weight, with respect to 100 parts by weight of the material.

In the magnesium-based composite material of the present invention, the $Mg_2Si$ grains are preferably dispersed. The grain size of $Mg_2Si$ is preferably set to not more than 10 nm to not less than 30 $\mu$m, more preferably not more than 100 nm to not less than 10 $\mu$m. In general, as the grain size of $Mg_2Si$ becomes smaller, the mechanical properties of the magnesium-base composite material are further improved.

With respect to the magnesium-base composite material of the present invention, although it depends on the components contained therein, the tensile strength is set to not less than 100 MPa to not more than 500 MPa, more preferably greater than 350 MPa to not more than 500 MPa, still more preferably 380 to 450 MPa.

Moreover, the magnesium-base composite material preferably has a Micro Vickers hardness (Hv) of 80 to 125, preferably 80 to 110, more preferably 85 to 105, and/or a Rockwell hardness of 40 to 120, preferably 80 to 105. Furthermore, its rigidity is preferably set to 47 to 65 GPa, more preferably 48 to 55 GPa. With such mechanical properties, this material is desirably applied to the above-mentioned products. Since conventional industrial Mg alloys have a tensile strength of approximately 200 to 350 MPa, the magnesium-base composite material of the present invention has excellent mechanical properties in comparison with these. In particular, with respect to the rigidity, although the amounts of the element components are slightly different from those of conventional Mg alloys, in comparison with the rigidity value of approximately 44 to 45 GPa of conventional Mg alloys, the magnesium-base composite material of the present invention containing $Mg_2Si$ makes it possible to greatly improve the value thereof. Moreover, with respect to the matrix material hardness, in comparison with the hardness (50 to 75 Hv) of conventional Mg alloys, the Mg-base composite material, which has $Mg_2Si$ grains having the above-mentioned grain-size range evenly dispersed in the material, makes it possible to greatly improve the hardness thereof.

Hereinafter, components contained in the Mg-base composite material of the present invention will be described.

<Magnesium silicide ($Mg_2Si$)>

Even when solely used, $Mg_2Si$ has high rigidity and high hardness, as well as excellent corrosion resistance and heat resistance, in comparison with Mg. The present inventors have found that, when $Mg_2Si$ is contained in an Mg alloy as dispersed grains, in particular, with its grain size being set to 10 nm to 30 $\mu$m, the resulting Mg-base composite material is allowed to have improved tensile strength, rigidity and hardness as well as improved corrosion resistance and heat resistance. However, in the case where practical use is taken into consideration, the grain size of $Mg_2Si$ is preferably set in a range from 100 nm to 10 $\mu$m in an attempt to achieve both of excellent characteristics and economical efficiency. Herein, the controlling processes of the grain size of $Mg_2Si$ are performed by using, for example, methods described below; i.e., plastic treatments to be performed repeatedly on the mixed material filling a metal mold and adjustments of the succeeding heating conditions (heating temperature).

<Magnesium oxide (MgO)>

When dispersed in the Mg-base composite material, MgO makes it possible to improve the mechanical characteristics of the composite material in the same manner as $Mg_2Si$. Simultaneously, MgO also has an effect for alleviating an opponent attacking property. In other words, MgO is harder than Mg alloys, and has a lower hardness in comparison with $Mg_2Si$; therefore, even when used in sliding-contact with an opponent material, it is possible to prevent MgO from attacking the opponent material seriously. Therefore, in the Mg-base composite material of the present invention, MgO grains having a grain size in the same range as that of $Mg_2Si$, i.e., a grain size of 10 nm to 30 $\mu$m, more preferably 100 nm to 10 $\mu$m, are evenly dispersed so that it is possible to provide an improved opponent-attacking property.

<Silica ($SiO_2$)>

Similar to MgO, $SiO_2$, which is an oxide, also alleviates the opponent-attacking property when dispersed in the magnesium-base composite material. As will be described later, in the case where $SiO_2$ is used as starting materials for the Mg-base composite material of the present invention, $SiO_2$ is allowed to react with Mg to be reduced and decomposed upon generating $Mg_2Si$ and MgO. Moreover, by adjusting the repeating plastic treatment amount and the heating temperature of the resulting solid matter, one portion of $SiO_2$ is allowed to remain in the composite material without reaction.

In the third aspect, the present invention provides a manufacturing method "C" of Mg-base composite material.

The manufacturing method C of the present invention includes the steps of: (a) blending a first material containing Mg and a second material containing Si at a predetermined ratio to prepare a blended material; (b) performing a plastic treatment on the resulting blended material to form a solid body; (c) heating the solid body to allow Mg and Si to react with each other, thereby forming a heat solid body containing $Mg_2Si$; and (d) performing a warm plasticization treatment on the heat solid body, and this method provides a magnesium-base composite material in which magnesium silicide ($Mg_2Si$) is dispersed in a matrix containing magnesium (Mg). By using this method and methods described below in detail, it is possible to obtain an Mg-base composite material having the above-mentioned characteristics and the like.

The first material containing Mg is not particularly limited as long as it contains Mg, and examples thereof include pure magnesium; an Mg alloy mainly containing Mg, for example, AZ31, AZ91, AM50 and AM60; and an industrial magnesium alloy such as a ZK-based alloy. In particular, in the case where Mg alloy powder is used, the particle size is preferably set to not less than 10 $\mu$m, more preferably not less than 50 $\mu$m, from the viewpoint of explosion prevention such as a powder explosion. Herein, the shape of the first material is not particularly limited as long as it satisfies the above-mentioned point, and it is preferably prepared as shapes such as chips, powder and small granulates. For example, a so-called thixo-mold-use material may be used.

The second material containing Si is not particularly limited as long as it contains Si, and examples thereof include Si itself, silica and $SiO_2$. Moreover, not particularly limited, the particle size is set in a wide range of sizes, for example, from a coarse material having a block shape with a unit of several centimeters to fine particles in a level of several microns that have been subjected to a mechanical grinding process.

With respect to the blending of the first and second materials, various weighing capacities of the respective materials and mixtures thereof are adopted. These steps are performed in the same methods as those conventionally used in the powder metallurgical field. Upon mixing the first and second materials, conventionally known means, such as a mixing grinder, for example, a V-type mixer and a ball mill, may be used. The mixing process may be performed in the air without causing any problems; however, it is preferably performed in a nitrogen or argon gas atmosphere so as to prevent oxidation on, for example, the powder surface of pure Mg powder. More specifically, in the case where fine particles are used, the mixing process is preferably performed with a mixing container filling the fine particles as well as nitrogen gas, argon gas or the like.

The resulting blended material is then subjected to a solid body forming step of forming a solid body through a plastic treatment.

The plastic treatment may be performed by using various means, and, for example, the methods described in the above-mentioned manufacturing methods (A) and (B) may be used. In other words, (A) the blended matter is prepared as mixed powder of the first sample and the second sample, and the plastic treatment may be performed by filling the container with the mixed powder and applying a pressure thereto to obtain a solid body as a compressed powder molded body having a void content of not more than 35%. Moreover, (B) the blended material is prepared as an aggregate of composite powder in which Si is dispersed in matrix powder containing Mg, and the plastic treatment is performed by filling the container with the aggregate of the composite powder and applying a pressure thereto to obtain a solid body as a compressed powder molded body. Furthermore, (C) the plastic treatment may be performed in the following manner: after filling a metal mold or a container with a blended material, the blended material is compressed and deformed, or extruded and deformed, or backward-extruded, and a desired combination of these operations is performed a plurality of times, so that the respective samples in the blended matter are mixed and/or ground and finally compressed to provide a solid body.

The solid body forming steps are performed in such a manner that the solid body is preferably formed so as to contain $Mg_2Si$ grains having a grain size of not less than 10 nm to not more than 30 μm, more preferably not more than 1 μm, or $Mg_2Si$ grains having a grain size of not less than 10 nm to not more than 30 μm, more preferably not more than 1 μm, and a second material having a grain size of not less than 10 nm to not more than 30 μm, more preferably not more than 3 μm.

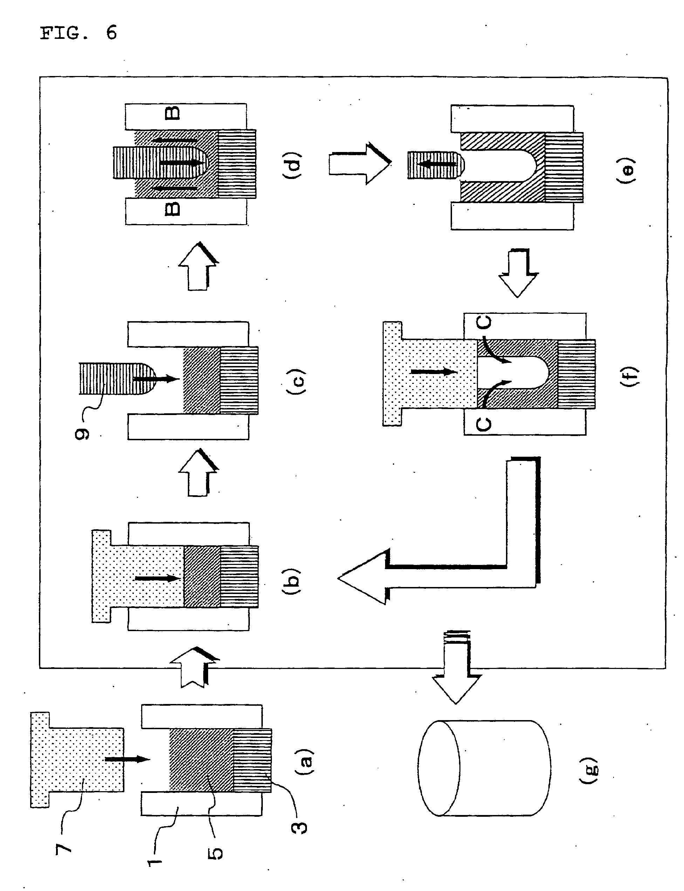

Among the solid body forming steps, with reference to Fig. 6, a specific example of the above-mentioned process (C) will be described below.

Figs. 6(a) is a schematic view showing a state where a container constituted by a metal mold 1 and a lower punch 3 is filled with a blended material 5.

Next, blended material 5 is subjected to plastic treatments (b) to (f). Plastic treatments (b) to (f) are performed by using a press machine having a compression upper punch 7 and a pushing upper punch 9. Herein, the press machine, used in this case, may be a press machine with any of the conventional driving systems such as a hydraulic system, a mechanical system and a screw system. However, in the case where pushing upper punch 9, which will be described later, is inserted into a compressed body 8, the lowering speed of the punch is desirably set at a high speed, for example, approximately 50 to 500 mm/sec by using, for example, a screw-type press.

In step (b), compression upper punch 7 is lowered into the metal mold so that the blended and mixed power is compressed and solidified to obtain compressed body 8. Next, after compression upper punch 7 has been raised (step (c)), in step (d), pushing upper punch 9 is lowered into metal mold 1. At this time, as shown in step (d), compressed body 8 is extruded backward (in the direction indicated by arrow B) so that a plastic treatment is applied thereto; thus, the first material containing Mg and the second material containing Si are mechanically ground and formed into fine particles.

Next, after pushing upper punch 9 has been raised (step (e)), compression upper punch 7 is again lowered into metal mold 1 to again compress the compression matter that has been formed into a U-shape as shown in Fig. 6 (f). Thus, the solid body, located along the inner face of metal mold 1, is allowed to reach the inside of metal mold 1 (in the direction indicated by arrow C). The sequence of these steps (b) to (f) is performed once, or repeated a plurality of times so that the first and second materials in blended power 5 are further mixed and stirred, and formed into fine powder.

The sequence of steps (b) to (f), that is, the compressing process (pressure-applying and compressing processes by compression upper punch 7) and the backward extruding plastic treatment by pushing upper punch 9, is set as one cycle, and by repeating a predetermined number of cycles so as to evenly mix and grind the first and second materials, $Mg_2Si$ is synthesized through a solid-phase dispersing phenomenon by adjusting the number of cycles.

The plastic treatment amount to be applied to the blended power is controlled so that the grain size of $Mg_2Si$ in the finally obtained composite material is adjusted, for example, in a range of 10 to 500 nm.

The plastic treatment amount is controlled by changing various parameters. For example, with respect to these parameters, the relative density of the solid body obtained by a compression on the final stage of this process, the number of cycles of (b) to (f), the relationship between the load and speed of pushing upper punch 9 in (b) as well as the relationship between the inner diameter of metal mold 1 and the outer diameter of pushing upper punch 9, and the load and speed of compression upper punch 7 in (f) are listed.

Herein, in order to eliminate the possibility of the blended and mixed powder being held in the bottom portion in metal mold 1, the following methods are effectively performed: metal mold 1 is reversed upside down with an interval of predetermined cycles if necessary, or after the blended and mixed matter has been taken out, the blended and mixed power is reversed upside down so as to again perform the compressing and backward extruding processes.

After repeating the sequence of steps (b) to (f) a predetermined number of cycles, the step (b) is performed so that a solid body having a cylinder shape (Fig. 6(g)) can be obtained. As described above, the solid body is allowed to contain (a) $Mg_2Si$ grains having a grain size of not less than 10 nm to not more than 30 $\mu$m, preferably not more than 1 $\mu$m, or (b) $Mg_2Si$ grains having a grain size of not less than 10 nm to not more than 30 $\mu$m, preferably not more than 1 $\mu$m, and a second material (for example, Si particles or $SiO_2$ particles) having a particle size of not less than 10 nm to not more than 30 $\mu$m, preferably not more than 3 $\mu$m. By controlling the above-mentioned parameters, the above-mentioned (a) or (b) can be prepared.

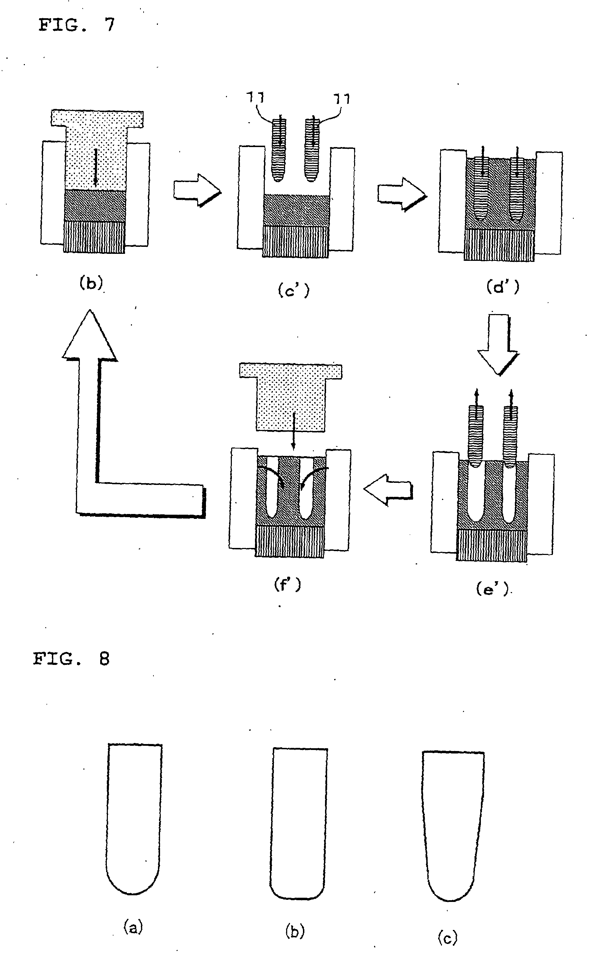

As shown in Fig. 7, instead of pushing upper punch 9 shown in Fig. 6, two pushing upper punches 11 may be used, or not less than three pushing upper punches may be used.

Although not particularly limited, the shape, material and the like of the pushing upper punch may have shapes indicated by, for example, Figs. 8(a) to (c) so that the blended material is not subjected to agglutination and burning phenomena onto the punch top portion during the backward extruding process at the time of insertion. In other words, in the vicinity of the tip end portion of the pushing upper punch, (a) a spherical shaped curvature, (b) a curvature on only the comer portion, or (c) curvatures on the taper and corner portions may be formed. Moreover, a coating process that is excellent in anti-abrasion and self-lubricating properties, such as Ni-P plating, Cr plating, DLC (Diamond Like Carbon) and a nitriding process, may be applied to the punch surface.

The solid body obtained by the solid body forming step has a relative density of approximately 75 to 95%, with the first material particles being insufficiently joined to each other; therefore, the solid body is then subjected to a heating step and a warm plasticization treatment step so as to have a finer structure.

The heating step makes it possible (1) to allow the first material to be easily deformed in the succeeding warm plasticization step and (2) to allow unreacted portion of the second sample, for example, Si or $SiO_2$ if any, to perform a solid phase reaction with Mg.

The heating temperature of the solid body is set to not less than 150°C to not more than 600°C, more preferably not less than 350°C to not more than 520°C. When the heating temperature is less than 150°C, it is not possible to obtain the effects of the above-mentioned (1), and it is also not possible to obtain a sufficient joining strength between the first material particles. Consequently, the Mg-base composite material tends to have degradation in the relative density or mechanical characteristics. In contrast, when the heating temperature exceeds 600°C, the first material (in particular, Mg), which constitutes the matrix material, tends to have coarse crystal grains and growth thereof, and consequently has degradation in the mechanical characteristics in the Mg-base composite material.

When this is heated to not less than 250°C, it is possible to allow a solid-phase reaction between unreacted Si or $SiO_2$ and Mg to progress; however, the heating temperature of the solid body is desirably set to not less than 350°C to not more than 520°C, in order to progress the solid-phase reaction stably while preventing $Mg_2Si$ grains thus solid-phase synthesized from becoming coarse, and to prevent degradation in the mechanical properties of the Mg-base composite material. Here, in order to prevent oxidation of the Mg component in the solid body, the heating atmosphere is prepared as an inert gas atmosphere such as nitrogen and argon or a vacuum state.

With respect to the warm plasticization treatment step, processes such as warm forging, warm extruding, warm rolling, swaging and drawing may be adopted.

Example

Hereinafter, the present invention will be described in detail on the basis of examples; however, the present invention is not intended to be limited by these examples.

(Example 1)

As starting materials, 90 parts by weight of pure Mg powder (average particle size: 112 $\mu$m) and 10 parts by weight of Si powder (average particle size: 64 $\mu$m) were prepared. After blending these, the resulting material was evenly mixed by a ball mill to obtain mixed powder. A circular metal mold having a diameter of 34 mm was filled with the resulting mixed powder, and a load having a face pressure of 2 to 7 t/cm$^2$ was applied thereto, thereby forming compressed powder molded bodies A-1 to A-7.

In a separated manner from the compressed powder molded bodies A-1 to A-7, the following tubular furnace was prepared. In other words, the tubular furnace in which nitrogen gas (gas flow rate: 3 dm$^3$/min) was allowed to flow, with the inner temperature thereof being controlled to 580°C, was prepared. Each of the compressed powder molded bodies A-1 to A-7, obtained as described above, was inserted into the tubular furnace, and after having been heated and maintained for 15 minutes, this was immediately solidified to a relative density of not less than 99% through a powder forging method to provide magnesium-base composite materials B1 to B-7. Herein, the conditions of the powder forging method were set to metal-mold temperature: 250°C; face pressure: 8 t/cm$^2$, and a water-soluble lubricating agent was applied to the metal mold side walls from the viewpoint of prevention of agglutination between the solid body and the metal mold.

Table 1 shows characteristics of the compressed powder molded bodies A-1 to A-7 obtained as described above and the magnesium-base composite materials B-1 to B7. In Table 1, "the void content" was a value calculated by the aforementioned method. Moreover, Table 1 also shows the synthesizing reaction starting temperature (in Table 1, simply referred to as "reaction starting temperature") of $Mg_2Si$ obtained through DSC measurements, the presence or absence of an Mg liquid phase, and mechanical characteristics of the magnesium-base composite materials B-1 to B-7 (hardness, tensile strength and breaking elongation).

Here, "the presence or absence of Mg liquid phase" was observed depending on whether or not there was any heat-absorbing peak in the vicinity of 650°C in the DSC measured results. In other words, when there was a heat-absorbing peak, this was caused by latent heat at the time of Mg liquid-phase appearance; therefore, it was concluded that "Mg liquid phase" was "present".

Moreover, the hardness, tensile strength and breaking elongation were respectively measured by the following methods.

<Measurements on hardness>

Hardness measurements were performed by using a Micro Vickers hardness tester under a load of 0.49 N.

<Measurements on tensile strength>

Test pieces having a diameter: $\phi$3.5mm and parallel portions: 14 mm were prepared. Each test piece was attached to a 10 ton autograph, and a tensile load was applied thereto at a shifting speed of 0.5 mm/min to perform a tensile test. Thus, a value obtained by dividing the load at which the test piece had been ruptured by the rupture area of the sample was measured as the tensile strength.

<Measurements on breaking elongation>

The breaking elongation was calculated based on the maximum displacement amount in an area (plastic deformation area) separated from a straight line having a constant gradient in a load-displacement curve obtained on chart paper during the tensile strength testing process.

Table 1

Characteristics of compressed powder molded bodies A-1 to A-7 and composite materials B-1 to B-7

| Run No. | Compressed powder molded body | Void content (%) | Reaction starting temperature (°C) | Presence or absence of Mg liquid phase | Composite material | Mechanical properties | | | |
|---|---|---|---|---|---|---|---|---|---|
| | | | | | | Hv | HRE | Tensile strength (MPa) | Breaking elongation (%) |
| 1 | A-1 | 9.2 | 423 | Absence | B-1 | 123 | 92 | 267 | 4.4 |
| 2 | A-2 | 15.3 | 452 | Absence | B-2 | 120 | 91 | 262 | 4.8 |
| 3 | A-3 | 24.8 | 484 | Absence | B-3 | 118 | 90 | 260 | 4.9 |
| 4 | A-4 | 29.5 | 496 | Absence | B-4 | 114 | 88 | 258 | 4.2 |
| 5 | A-5 | 33.2 | 511 | Absence | B-5 | 112 | 84 | 251 | 3.8 |
| 6 | A-6 | 38.9 | 535 | Presence | B-6 | 107 | 72 | 202 | 2.1 |
| 7 | A-7 | 42.2 | 541 | Presence | B-7 | 104 | 70 | 197 | 1.7 |

The compressed powder molded bodies A-1 to A-5, which had a void content in accordance with the present invention, were applied so that it became possible to form $Mg_2Si$ in a solid phase without causing a liquid phase of Mg. Moreover, as a result, composite materials B-1 to B-5 in which fine $Mg_2Si$ was dispersed in a magnesium base element were obtained, and as shown in Table 1, it was confirmed that the materials had excellent mechanical characteristics.

In contrast, when the compressed powder molded bodies A-6 and A-7, which had a void content that was out of the definition of the present invention, were applied to form composite materials, $Mg_2Si$ was formed not only in a solid phase, but also in a liquid phase. Therefore, composite materials B-6 and B-7 in which coarse $Mg_2Si$ grains were formed were obtained; consequently, as shown in Table 1, there was extreme degradation in the mechanical properties in the composite materials B-6 and B-7.

(Example 2)

As starting materials, 85 parts by weight of AZ91D magnesium alloy powder (average particle size: 61 $\mu$m; nominal composition: Mg-9A1-1Zn/mass %) and 15 parts by weight of Si powder (average particle size: 64 $\mu$m) were prepared. After blending these, the resulting material was evenly mixed by a ball mill to obtain mixed powder. A circular metal mold having a diameter of 11.3 mm was filled with the resulting mixed powder, and a load having a face pressure of 5 t/cm$^2$ was applied thereto, thereby forming a compressed powder molded body A-8. The void content thereof was measured to find that it showed 12.3%, which satisfied the range defined by the present invention.

The compressed powder molded body A-8, obtained as described above, was inserted into a tubular furnace through which nitrogen gas (gas flow rate: 2 dm$^3$/min) was allowed to flow, and after having been heated at the respective heating temperatures shown in Table 2 for 30 minutes, and maintained, this was cooled to normal temperature in the furnace to provide composite materials B-8 to B-14. A structure observation by an optical microscope and X-ray diffraction processes were performed on these materials B-8 to B-14 so that the presence or absence of synthesized $Mg_2Si$ and the residual Si were confirmed. Table 2 shows the results of these.

## Table 2

Characteristics of compressed powder molded body A-8 and composite materials B-8 to B-14

| Run No. | Compressed powder molded body | Heating temperature (°C) | Composite material | Presence or absence of $Mg_2Si$ | Residual Si |
|---|---|---|---|---|---|
| 8 | A-8 | 375 | B-8 | Presence | Absence |
| 9 | A-8 | 430 | B-9 | Presence | Absence |
| 10 | A-8 | 500 | B-10 | Presence | Absence |
| 11 | A-8 | 565 | B-11 | Presence | Absence |
| 12 | A-8 | 600 | B-12 | Presence | Absence |
| 13 | A-8 | 200 | B-13 | Absence | Presence |
| 14 | A-8 | 330 | B-14 | Absence | Presence |

EP 1 433 862 A1

As indicated by the composite materials B-8 to B-12, it has been confirmed that the heating process in an appropriate temperature range allows the reaction between Mg and Si to progress to synthesize $Mg_2Si$. Moreover, in these materials, all the added Si powder contributes to the reaction with Mg so that no Si powder remains in the material after the $Mg_2Si$ synthesizing reaction.

In contrast, as indicated by the composite materials B-13 and B-14, it was confirmed that the heating process in a temperature range lower than the appropriate temperature range prevents the reaction of Mg and Si from progressing, failing to synthesize $Mg_2Si$. Moreover, it was confirmed that Si powder remains in the composite materials B-13 and B-14.

(Example 3)

Pure Mg powder (average particle size: 112 µm) and Si powder (average particle size: 64 µm) were prepared as starting materials, and the two materials were mixed so as to have a blended composition as shown in Table 3, thereby obtaining mixed powder. A circular metal mold having a diameter of 11.3 mm was filled with the resulting mixed powder, and a load having a face pressure of 6 t/cm$^2$ was applied thereto, thereby forming green compact molded bodies A-9 to A-15. The void contents of these molded bodies A-9 to A-15 were measured to obtain values of 8.9 to 11%, each of which satisfies the range defined by the present invention.

Each of the compressed powder molded bodies A-9 to A-15, obtained as described above, was inserted into a tubular furnace through which nitrogen gas (gas flow rate: 2 dm$^3$/min) was allowed to flow, with the temperature inside thereof being controlled to 580°C, and after having been heated and maintained for 15 minutes, this was cooled to normal temperature in the furnace to obtain composite materials B-15 to B-21. With respect to these materials B-15 to B-21, the external appearance was observed, and elements and compounds composing the material were identified by X-ray diffraction measurements. Table 3 shows the results thereof.

Table 3

Characteristics of compressed powder molded bodies A-9 to A-15 and composite materials B-15 to B-21

| Run No. | Blended composition (mass %) | | Compressed powder molded body | Composite material | Results of X-ray diffraction | External appearance |
|---|---|---|---|---|---|---|
| | Si | Mg | | | | |
| 15 | 5 | 95 | A-9 | B-15 | Mg$_2$Si, Mg | Preferable solid body |
| 16 | 12 | 88 | A-10 | B-16 | Mg$_2$Si, Mg | Preferable solid body |
| 17 | 18 | 82 | A-11 | B-17 | Mg$_2$Si, Mg | Preferable solid body |
| 18 | 27 | 73 | A-12 | B-18 | Mg$_2$Si, Mg | Preferable solid body |
| 19 | 34 | 66 | A-13 | B-19 | Mg$_2$Si, Mg | Preferable solid body |
| 20 | 39 | 61 | A-14 | B-20 | Mg$_2$Si, Si | Damaged upon transportation |
| 21 | 44 | 56 | A-15 | B-21 | Mg$_2$Si, Si | Damaged upon transportation |

EP 1 433 862 A1

Table 3 shows that by setting the blend ratio of Mg and Si that are starting materials to an appropriate value (A-9 to A-13), a composite material (B-15 to B-19) having excellent shape and external appearance, and containing $Mg_2Si$ and Mg is obtained; in contrast, when the blend ratio is not an appropriate value (A-14 and A-15), a material (B-20 and B-21) containing $Mg_2Si$ and Mg fails to have sufficient strength, and is susceptible to damages upon transportation is obtained.

(Example 4)

Pure Mg powder (average particle size: 223 $\mu$m) and Si powder (average particle size: 105 $\mu$m) were prepared as starting materials, and the two materials were mixed so as to have a blended composition as shown in Table 4, thereby obtaining mixed powder. A circular metal mold having a diameter of 34 mm was filled with the resulting mixed powder, and a load having a face pressure of 6 t/cm$^2$ was applied thereto, thereby forming compressed powder molded bodies A-16 to A-22. The void contents of these molded bodies A-16 to A-22 were measured to obtain values of 8.3 to 10.7%, each of which satisfies the range defined by the present invention.

Each of the compressed powder molded bodies A-16 to A-22, obtained as described above, was inserted into a tubular furnace through which nitrogen gas (gas flow rate: 3 dm$^3$/min) was allowed to flow, with the temperature inside thereof being controlled to 580°C, and after having been heated and maintained for 15 minutes, this was immediately solidified to a relative density of not less than 99% through a powder forging method to obtain composite materials B-22 to B-28. Herein, the conditions of the powder forging method were set to metal-mold temperature: 250°C; face pressure: 8 t/cm$^2$, and a water-soluble lubricating agent was applied to the metal mold side walls from the viewpoint of prevention of agglutination between the solid body and the metal mold.

<Average corrosion speed>

With respect to the composite materials B-22 to B-28, the average corrosion speed was measured. In these measurements, a cube (10 mm $\times$ 10 mm $\times$ 10 mm in thickness) was taken from each of the materials B-22 to B-28 through a machining process, and this was then polished by emery paper to prepare a test piece. This test piece was evaluated on its corrosion resistance by using a 5% salt-water atomizing test (100 hr). The average corrosion speed was calculated from weight changes before and after the test, and used as indexes of the corrosion resistance evaluation. Table 4 also shows the results thereof. Herein, Table 4 also shows the amount of $Mg_2Si$ (calculated value from blended composition).

Table 4

Characteristics of compressed powder molded bodies A-16 to A-22 and composite materials B-22 to B-28

| Run No. | Blended composition (mass %) | | Compressed powder molded body | Composite material | Mg$_2$Si (mass %) | Average corrosion speed (g/m$^2$/hr) |
|---|---|---|---|---|---|---|
| | Si | Mg | | | | |
| 22 | 2 | 98 | A-16 | B-22 | 5.4 | 0.07 |
| 23 | 3 | 97 | A-17 | B-23 | 8.2 | 0.05 |
| 24 | 5 | 95 | A-18 | B-24 | 13.6 | 0.03 |
| 25 | 10 | 90 | A-19 | B-25 | 27.3 | 0.02 |
| 26 | 20 | 80 | A-20 | B-26 | 54.6 | 0.01 |
| 27 | 0 | 100 | A-21 | B-27 | 0 | 0.19 |
| 28 | 1 | 99 | A-22 | B-28 | 2.7 | 0.16 |

EP 1 433 862 A1

Table 4 shows that the composite materials B-22 to B-26 have excellent corrosion resistance. In contrast, the materials B-27 and B-28, which contain a small amount of $Mg_2Si$, are poor in corrosion resistance.

(Example 101)

As starting materials, 85 parts by weight of pure Mg powder (average particle size: 168 μm) and 15 parts by weight of Si powder (average particle size: 58 μm) were prepared. After blending these, the resulting material was mechanically ground, mixed and press-bonded for 5 hours by using a rotary ball mill to obtain composite powder X-101. A circular metal mold having a diameter of 34 mm was filled with the resulting composite powder X-101, and a load having a face pressure of 6 t/cm$^2$ was applied thereto, thereby forming a compressed powder molded body A-101.

Moreover, a compressed powder molded body A-102, which had the same composition as the compressed powder molded body A-101, but was not subjected to the rotary ball mill process of 5 hours, was formed.

In a separated manner from the compressed powder molded body A-101, the following tubular furnace was prepared. In other words, the tubular furnace in which nitrogen gas (gas flow rate: 3 dm$^3$/min) was allowed to flow, with the inner temperature thereof being controlled in the vicinity of 100 to 500°C shown in Table 1, was prepared. Either the compressed powder molded body A-101 or A-102, obtained as described above, was inserted into the tubular furnace, and after having been heated and maintained for 5 minutes, this was immediately solidified to a relative density of not less than 99% through a powder forging method to provide magnesium-base composite materials B-101 to B-110. Herein, the conditions of the powder forging method were set to metal-mold temperature: 250°C; face pressure: 8 t/cm$^2$, and a water-soluble lubricating agent was applied to the metal mold side walls from the viewpoint of prevention of agglutination between the solid body and the metal mold.

Table 101 shows characteristics of the compressed powder molded body A-101 or A-102 and the magnesium-base composite materials B-101 to B-110. In Table 101, "the presence or absence of $Mg_2Si$" was observed through X-ray diffractions. Further, "the hardness" is a value obtained by a Rockwell tester of scale E. "The tensile strength" was measured by the above-mentioned method.

Table 101

Characteristics of compressed powder molded bodies A-101 and A-102 and composite materials B-102 to B-110

| Run No. | Rotary ball mill process | Compressed powder molded body | Heating temperature (°C) | Composite material | Presence or absence of $Mg_2Si$ | Hardness HRE | Tensile strength (MPa) |
|---|---|---|---|---|---|---|---|
| 101 | Performed | A-101 | 150 | B-102 | Presence | 113 | 253 |
| 102 | Performed | A-101 | 205 | B-102 | Presence | 110 | 271 |
| 103 | Performed | A-101 | 262 | B-103 | Presence | 108 | 288 |
| 104 | Performed | A-101 | 300 | B-104 | Presence | 105 | 304 |
| 105 | Performed | A-101 | 343 | B-105 | Presence | 102 | 315 |
| 106 | Performed | A-101 | 415 | B-106 | Presence | 90 | - |
| 107 | Performed | A-101 | 500 | B-107 | Presence | 81 | 223 |
| 108 | Performed | A-101 | 95 | B-108 | Absence | 45 | 45 |
| 109 | Not performed | A-102 | 157 | B-109 | Absence | 42 | 89 |
| 110 | Not performed | A-102 | 342 | B-110 | Absence | 44 | 188 |

Run Nos. 101 to 105, which used composite powder in accordance with the present invention and had a low heating temperature in a range of 150°C to 343°C, made it possible to obtain a composite material with high hardness. Run Nos. 106 and 107 were confirmed to generate $Mg_2Si$ since it used composite powder in accordance with the present invention; however, its hardness was lower than desired hardness. This is because the heating temperature was too high to allow $Mg_2Si$ particles to become coarse. Moreover, although it used composite powder in accordance with the present invention, Run No. 108 was not confirmed to generate $Mg_2Si$ since its heating temperature was too low, and also failed to provide sufficient hardness. Runs Nos. 109 and 110 did not use composite powder in accordance with the present invention, and its heating temperature was too low; therefore, Runs Nos. 109 and 110 were not confirmed to generate $Mg_2Si$. Of course, these failed to provide sufficient hardness.

(Example 102)

As starting materials, 90 parts by weight of AZ91D magnesium alloy powder (average particle size: 61 μm; nominal composition: Mg-9A1-1Zn/mass %) and 10 parts by weight of Si powder (average particle size: 64 μm) were prepared. After blending these, the resulting material was mechanically ground, mixed and press-bonded for 4 hours by using a vibration ball mill to obtain composite powder. A circular metal mold having a diameter of 34 mm was filled with the resulting composite powder, and a load having a face pressure of 6 t/cm$^2$ was applied thereto, thereby forming a green compact molded body A-103.

Moreover, a compressed powder molded body A-104, which had the same composition as the compressed powder molded body A-103, but was not subjected to the vibration ball mill process of 4 hours, was formed.

In a separated manner from the compressed powder molded body A-103 or A-104, the following tubular furnace was prepared. In other words, the tubular furnace in which nitrogen gas (gas flow rate: 3 dm$^3$/min) was allowed to flow, with the inner temperature thereof being controlled in the vicinity of 80 to 530°C shown in Table 1, was prepared. Either the compressed powder molded body A-103 or A-104, obtained as described above, was inserted into the tubular furnace, and after having been heated and maintained for 5 minutes, this was immediately solidified to a relative density of not less than 99% through a powder forging method to provide magnesium-base composite materials B-111 to B-120. Herein, the conditions of the powder forging method were set to metal-mold temperature: 250°C; face pressure: 8 t/cm$^2$, and a water-soluble lubricating agent was applied to the metal mold side walls from the viewpoint of prevention of agglutination between the solid body and the metal mold.

Table 102 shows characteristics of the compressed powder molded body A-103 or A-104 and the magnesium-base composite materials B-111 to B-120. In Table 102, "the presence or absence of $Mg_2Si$" was observed through X-ray diffractions. Further, "the hardness" is a value obtained by a Rockwell tester of scale E in the same manner as described above.

Table 102

Characteristics of compressed powder molded bodies A-103 and A-104 and composite materials B-111 to B-120

| Run No. | Vibration ball mill process | Compressed powder molded body | Heating temperature (°C) | Composite material | Presence or absence of $Mg_2Si$ | Hardness HRE | Tensile strength (MPa) |
|---|---|---|---|---|---|---|---|
| 111 | Performed | A-103 | 160 | B-111 | Presence | 107 | 214 |
| 112 | Performed | A-103 | 197 | B-112 | Presence | 106 | 230 |
| 113 | Performed | A-103 | 248 | B-113 | Presence | 103 | 251 |
| 114 | Performed | A-103 | 302 | B-114 | Presence | 101 | 272 |
| 115 | Performed | A-103 | 346 | B-115 | Presence | 98 | 288 |
| 116 | Performed | A-103 | 422 | B-116 | Presence | 83 | - |
| 117 | Performed | A-103 | 525 | B-117 | Presence | 75 | 155 |
| 118 | Performed | A-103 | 80 | B-118 | Absence | 66 | 47 |
| 119 | Not performed | A-104 | 159 | B-119 | Absence | 64 | 84 |
| 120 | Not performed | A-104 | 338 | B-120 | Absence | 62 | 162 |

EP 1 433 862 A1

Run Nos. 111 to 115, which used composite powder in accordance with the present invention and had a low heating temperature in a range of 150°C to 346°C, made it possible to obtain a composite material with high hardness. Run Nos. 116 and 117 were confirmed to generate $Mg_2Si$ since it used composite powder in accordance with the present invention; however, its hardness was lower than desired hardness. This is because the heating temperature was too high to make $Mg_2Si$ particles become coarse. Moreover, although it used composite powder in accordance with the present invention, Run No. 118 was not confirmed to generate $Mg_2Si$ since its heating temperature was too low, and also failed to provide sufficient hardness. Runs Nos. 109 and 110 did not use composite powder in accordance with the present invention, and its heating temperature was too low; therefore, Runs Nos. 109 and 110 were not confirmed to generate $Mg_2Si$. Of course, they failed to provide sufficient hardness.

(Example 103)

A disc (diameter 50 mm, thickness 3 mm) made of pure Mg (pureness 99.85%) and the composite powder X-101 of example 101 were prepared. The disc was prepared with the composite powder X-101 being placed on one surface of the disc, and this was inserted into a furnace through which nitrogen gas (gas flow rate: 3 $dm^3$/min) with the temperature thereof being controlled to 160°C, and heated and maintained for 5 minutes. Thereafter, a face pressure 8 $t/cm^2$ was applied thereto by using a hydraulic press so that a clad plate member on which the magnesium-base composite powder adhered to the magnesium round plate was formed. This was again inserted into the furnace in an nitrogen gas atmosphere, and heated at a temperature of 250°C and maintained for 10 minutes.

With respect to the resulting composite material, the presence or absence of any $Mg_2Si$ peak was confirmed by X-ray diffraction, and after having been polished by emery paper, this was then evaluated on its corrosion resistance by using a 5% salt-water atomizing test (100 hr). The average corrosion speed was calculated from weight changes before and after the test, and used as indexes of the corrosion resistance evaluation.

As a result of the X-ray diffraction, an $Mg_2Si$ peak was confirmed on the surface which was clad with the composite powder X-101. Moreover, the observation of an optical microscope showed that the magnesium-base composite was preferably joined to magnesium serving as a matrix material. In contrast, as a result of XRD, no peak of $Mg_2Si$ was observed on the surface bearing no composite powder X-101, with only the magnesium peak being observed.

As a result of the corrosion resistance test, the average corrosion speed on the clad surface side was 0.014 $g/m^2$/hr; in contrast, the average corrosion speed on the Mg plate member without cladding was 0.21 $g/m^2$/hr. In other words, it was confirmed that the magnesium-base composite material with cladding makes it possible to improve the corrosion resistance greatly.

(Example 201)

AZ31D magnesium alloy powder (average particle size: 252 $\mu$m) and Si powder (average particle size: 42 $\mu$m) were prepared as starting materials. After blending the AZ31 powder and Si powder at a ratio shown in Table 201, the resulting material was evenly mixed by using a ball mill to obtain mixed powder. Next, 25 g of each mixed powder was put into a cylindrical metal mold (made of cemented carbide alloy) having an inner diameter of 35 mm, attached to a 100 ton screw-type press-working machine. As shown in Figs. 6(a) to 6(g), a plastic treatment by using a backward extrusion method using a pushing punch (made of SKD 11 steel) was repeatedly performed to finally obtain a solid body.

Herein, the diameter of the pushing punch was 28 mm, and the punch top portion had a semi-circular shape with a radius of 14 mm. Moreover, upon application of pressure by using a compression punch, the relative density of the solid body was 88%, and the entire length (height) of the solid body was 30 mm. Moreover, during the repeated plastic treatment process, the number of cycles shown in Table 201 was used. Herein, with respect to the cycles, one time of a pressure applying process by the compression punch and one time of a backward extrusion process by the insertion of the pushing punch are set to one cycle.

Each of the resulting solid body was inserted into a tubular furnace (inner furnace temperature: 500°C) through which nitrogen gas (gas flow rate: 3 $dm^3$/min) was allowed to flow, and heated and maintained for 10 minutes, and the resulting molded body was taken out of the furnace, and this was immediately subjected to a warm extrusion method to obtain rod-shaped magnesium-base extruded composite materials M-1 to M-13 having a diameter of 7 mm. Herein, the warm extrusion conditions were: extrusion die temperature: 300°C and extrusion ratio: 37.

With respect to the resulting magnesium-base extruded composite materials M-1 to M-13, structure observations were performed by using (1) X-ray diffraction measurements and (2) an optical microscope, a scanning electron microscope (SEM) and a transmission-type electron microscope (TEM). Herein, with respect to the (2) structure observation, image analyses were performed on 10 visual fields by using binary processes so that the particle size of $Mg_2Si$ particles was calculated. Table 201 also shows the results thereof. Moreover, with respect to the magnesium-base extruded composite materials M-1 to M-13, the tensile strength $\sigma$, Micro Vickers hardness Hv, Rockwell hardness (E scale) HRE and rigidity (Young's Modulus) were measured. Table 201 also shows the results thereof.

Table 201

Preparation of Mg-base composite materials M-1 to M-13 and characteristics thereof

| Run No. | Amount of Si (mass %) | Number of cycles (times) | Material | Mg₂Si grain size | Mechanical characteristics | | | |
|---|---|---|---|---|---|---|---|---|
| | | | | | Tensile strength (MPa) | Hv | HRE | Rigidity (GPa) |
| I-1 | 2.0 | 400 | M-1 | 230nm-2.4μm | 355 | 83 | 89 | 47 |
| I-2 | 4.0 | 500 | M-2 | 110-430nm | 372 | 87 | 94 | 49 |
| I-3 | 6.0 | 500 | M-3 | 120-705nm | 386 | 90 | 97 | 50 |
| I-4 | 8.0 | 500 | M-4 | 135-870nm | 402 | 93 | 100 | 51 |
| I-5 | 10.0 | 600 | M-5 | 100-510nm | 411 | 95 | 103 | 52 |
| I-6 | 12.0 | 600 | M-6 | 125-560nm | 424 | 97 | 104 | 53 |
| I-7 | 5.0 | 400 | M-7 | 110-650nm | 377 | 85 | 95 | 48 |
| I-8 | 5.0 | 600 | M-8 | 75-390nm | 405 | 89 | 96 | 48 |
| I-9 | 5.0 | 800 | M-9 | 15-280nm | 438 | 92 | 98 | 48 |
| I-10 | 0 | 400 | M-10 | None | 295 | 72 | 80 | 44 |
| I-11 | 1.0 | 400 | M-11 | 320nm-3.1μm | 322 | 77 | 82 | 45 |
| I-12 | 13.0 | 600 | M-12 | 180-680nm | 394 | 98 | 108 | 54 |
| I-13 | 5.0 | 0 | M-13 | 35-52μm | 339 | 81 | 91 | 48 |

With respect to Mg-base composite materials M-1 to M-9, it was confirmed that $Mg_2Si$ grains were dispersed in each of the resulting Mg-base composite materials through structure observations by using an optical microscope, a scanning electron microscope (SEM) and a transmission-type electron microscope (TEM).

Moreover, as shown in Table 201, the Mg-base composite materials M-1 to M-9 were desired mechanical characteristics such as tensile strength, Vickers hardness and rigidity. These mechanical characteristics are dependent on the amount of Si and the number of cycles of plastic treatment used upon preparation of the composite material and $Mg_2Si$ particle sizes in the resulting material.

For example, in comparison with M-7 to M-9, even in the case of the same amount of Si, an increase in the number of cycles of plastic treatment makes the resulting $Mg_2Si$ grain size smaller, thereby increasing the values of the mechanical characteristics of the Mg-base extruded composite material.

With respect to the Mg-base composite material M-10, since no Si powder was contained as the starting material, no $Mg_2Si$ grains are generated. Therefore, the resulting Mg-base composite material M-10 was poor in the mechanical characteristics such as tensile strength, Vickers hardness and rigidity, and failed to provide desired characteristics.

Although the Mg-base composite material M-11 contained Si powder as its starting material, the amount thereof was set to a low level of 1%; therefore, the resulting Mg-base composite material M-11 was poor in the mechanical characteristics, and failed to provide desired characteristics.

With respect to the Mg-base composite material M-12, the amount of Si serving as its starting material was set to a high level of 13% so that desired characteristics were obtained in its mechanical characteristics (tensile strength, Vickers hardness and rigidity); however, the toughness (elongation) thereof was considerably lowered to 0%, causing a problem with the cutting property of the extruded material due to tool abrasion.

The Mg-base composite material M-13 was a material obtained by simply applying a compressing process to the mixture of the AZ31 alloy powder and Si powder without applying the repeated plastic treatment thereto. Therefore, the Si particles were not sufficiently ground, with the result that the $Mg_2Si$ grain size (35 to 52 µm) in the resulting Mg-base extruded composite material M-13 was approximately the same as the particle size (average particle size: 42 µm) of Si powder serving as the starting material, which was relatively large; consequently it was not possible to provide desired mechanical properties.

(Example 202)

AM60 magnesium alloy chips (length: 2 to 5 mm) and $SiO_2$ powder (average particle size: 68 µm) were prepared as starting materials. After blending these two materials at a ratio shown in Table 202, the resulting material was evenly mixed by using a ball mill to obtain mixed powder. Next, 25 g of each mixed powder was injected into a cylinder-shaped metal mold (made of cemented carbide alloy) having an inner diameter of 35 mm, attached to a 100 ton screw-type press-working machine. As shown in Figs. 6(a) to 6(g), a plastic treatment by using a backward extrusion method using a pushing-use punch (made of SKD 11 steel) was repeatedly performed to finally obtain a solid body.

Herein, the diameter of the pushing punch was 28 mm, and the punch top portion had a semi-circular shape with a radius of 14 mm. Moreover, upon application of pressure by using a compression punch, the relative density of the solid body was 88%, and the entire length (height) of the solid body was 30 mm. The number of cycles shown in Table 202 was defined in the same manner as Example 201.

Each of the resulting solid body was inserted into a tubular furnace (inner furnace temperature: 520°C) through which nitrogen gas (gas flow rate: 3 $dm^3$/min) was allowed to flow, and heated and maintained for 10 minutes, and the resulting molded body was taken out of the furnace, and this was immediately subjected to a warm extrusion method to obtain rod-shaped magnesium-base extruded composite materials M-14 to M-23 having a diameter of 7 mm.

Herein, the warm extrusion conditions were extrusion die temperature: 300°C and extrusion ratio: 37.

With respect to the resulting magnesium-base extruded composite materials M-14 to M-23, the Si component amount was analyzed by ICP. Moreover, the presence or absence of the generated or remaining $Mg_2Si/MgO/SiO_2$ was confirmed by using X-ray diffraction (XRD). Furthermore, with respect to the magnesium-base extruded composite materials M-14 to M-23, the tensile strength σ, Micro Vickers hardness Hv, Rockwell hardness (E scale) HRE and rigidity (Young's Modulus) were measured. Table 202 shows the results thereof. Table 202 also shows the grain sizes of $Mg_2Si$ calculated in the same method as example 201.

Table 202

Preparation of Mg-base composite materials M-14 to M-23 and characteristics thereof

| Run No. | Number of cycles (times) | Material | Amount of Si (mass %) | Results of XRD | | | Mg₂Si grain size | Mechanical characteristics of materials | | | |
|---|---|---|---|---|---|---|---|---|---|---|---|
| | | | | $Mg_2Si$ | MgO | $SiO_2$ | | Tensile strength (MPa) | Hv | HRE | Rigidity (GPa) |
| II-1 | 500 | M-14 | 2.3 | ○ | ○ | · | 105-580nm | 362 | 82 | 91 | 47 |
| II-2 | 500 | M-15 | 4.4 | ○ | ○ | · | 135-650nm | 381 | 86 | 95 | 49 |
| II-3 | 600 | M-16 | 7.5 | ○ | ○ | ○ | 155-740nm | 397 | 90 | 98 | 50 |
| II-4 | 600 | M-17 | 9.8 | ○ | ○ | · | 165-580nm | 406 | 93 | 101 | 51 |
| II-5 | 700 | M-18 | 11.5 | ○ | ○ | ○ | 150-480nm | 438 | 96 | 103 | 52 |
| II-6 | 900 | M-19 | 9.8 | ○ | ○ | · | 35-225nm | 468 | 98 | 104 | 51 |
| II-7 | 500 | M-20 | 0.8 | ○ | ○ | · | 165-660nm | 312 | 75 | 81 | 45 |
| II-8 | 600 | M-21 | 1.3 | ○ | ○ | · | 145-590nm | 338 | 78 | 83 | 46 |
| II-9 | 0 | M-22 | 4.4 | ○ | ○ | ○ | 51-95μm | 333 | 80 | 89 | 49 |
| II-10 | 35 | M-23 | 4.4 | ○ | ○ | ○ | 41-72μm | 338 | 80 | 89 | 49 |

The Mg-base composite materials M-14 to M-19 had desired mechanical characteristics. In these cases, the grain size of $Mg_2Si$ grains dispersed in the composite material was set to 10 nm to 30 μm, in particular, 10 nm to 800 nm. Herein, as shown in Table 202, even when the composite material contained MgO or MgO and $SiO_2$, it was allowed to exert desired mechanical characteristics.

In comparison with the magnesium-base extruded composite materials M-17 to M-19, even in the case of the same amount of Si, an increase in the number of cycles of plastic treatment allows the $Mg_2Si$ grains formed by a solid-phase reaction to have a fine particle size, thereby making it possible to improve the mechanical characteristics of the resulting composite material.

In contrast, any of the magnesium-base extruded composite materials M-20 to M-23 failed to provide desired tensile strength. The reasons for this are described as follows.

Table 202 shows that, with respect to the composite materials M-20 and M-21, all the Si component contained in the material has been formed into $Mg_2Si$; however, it is considered that, since the amount thereof is small, desired mechanical properties are not obtained.

The composite material M-22 was a material obtained by simply applying a compressing process to the starting material without applying the repeated plastic treatment thereto. Therefore, the $Mg_2Si$ grain size (51 to 95 μm) in the resulting Mg-base extruded composite material was approximately the same as the particle size (average particle size: 68 μm) of $SiO_2$ powder serving as the starting material. Consequently, the $SiO_2$ powder was not finely ground, and it was not possible to provide desired mechanical properties.

With respect to the composite material M-23, the repeated plastic treatment was performed; however, since the number of cycles was small, the $SiO_2$ powder was not finely ground in the same manner as the composite material M-22, and it was not possible to provide desired mechanical properties.

(Example 203)

AZ31 magnesium alloy powder (average particle size 252 μm) and Si powder (average particle size: 42 μm) were prepared as starting materials. The AZ31 powder and Si powder were blended at an Si content of 5% on the weight basis. The resulting material was evenly mixed by using a ball mill to obtain mixed powder. Next, 25 g of each mixed powder was put into a cylindrical metal mold (made of cemented carbide alloy) having an inner diameter of 35 mm, attached to a 100 ton screw-type press working machine. As shown in Figs. 6(a) to 6(g), a plastic treatment by using a backward extrusion method using a pushing-use punch (made of SKD 11 steel) was repeatedly performed to finally obtain solid bodies S-1 to S-10.

Herein, the diameter of the pushing punch was 30 mm, and the punch top portion had a semi-circular shape with a radius of 15 mm. Moreover, the applied pressure by the compression punch was adjusted so as to set the relative density of the resulting solid body to a value shown in Table 203. The number of cycles shown in Table 203 was defined in the same manner as example 201.

With respect to the mixed solid body obtained by the repeated plastic treatment based on a predetermined number of cycles, structure observations were performed by using an optical microscope, a scanning electron microscope (SEM) and a transmission-type electron microscope (TEM). Here, with respect to 10 visual fields observed, image analyses were performed by using binary processes so that the grain sizes of Si and $Mg_2Si$ grains of the solid body S-1 to S-10 were calculated. Table 203 also shows the results thereof.

Table 203

Preparation of solid bodies S-1 to S-10 and characteristics thereof

| Run No. | Relative density (%) | Number of cycles (times) | Solid body | Si grain size | Mg₂Si grain size |
|---|---|---|---|---|---|
| III-1 | 78 | 400 | S-1 | 320-850nm | 180-450nm |
| III-2 | 85 | 400 | S-2 | 275-765nm | 160-475nm |
| III-3 | 90 | 400 | S-3 | 260-740nm | 165-425nm |
| III-4 | 93 | 400 | S-4 | 240-660nm | 125-380nm |
| III-5 | 89 | 600 | S-5 | 135-350nm | 105-330nm |
| III-6 | 89 | 800 | S-6 | 95-140nm | 30-110nm |
| III-7 | 89 | 1000 | S-7 | None | 10-90nm |
| III-8 | 89 | 0 | S-8 | 36-66μm | 39-69nm |
| III-9 | 89 | 25 | S-9 | 28-48μm | 29-52μm |
| III-10 | 89 | 50 | S-10 | 22-37μm | 24-40μm |

EP 1 433 862 A1

The solid bodies S-1 to S-7, which were obtained by sufficiently performing the repeated plastic treatment, had $Mg_2Si$ grains that had been formed into fine grains. Therefore, it is confirmed that the repeated plastic treatment processes make it possible to solid-phase synthesize fine $Mg_2Si$ grains. Moreover, the solid bodies S-1 to S-6 had fine Si grains. The solid bodies S-1 to S-6 having fine, unreacted Si grains are then subjected to a heating process and a warm plasticization treatment process so that it also becomes possible to synthesize all the unreacted Si grains into $Mg_2Si$ grains. In general, it is considered that the $Mg_2Si$ grains, obtained through these processes, are dependent on the grain size of the unreacted Si grains so that the $Mg_2Si$ grains of the Mg-base composite material, obtained by performing heating steps and warm plasticization treatment steps on the solid bodies S-1 to S-6, are allowed to have a fine structure.

Moreover, in comparison with Run Nos. III-1 to III-4, there is a difference in the relative density in the solid bodies. In other words, by increasing the relative density, it becomes possible to further finely grind the Si powder.

In contrast, the solid bodies S-8 to S-10 were not subjected to the repeated plastic treatment (S-8), or were not subjected to a sufficient amount of repeated plastic treatment (S-9 and S-10); therefore, the resulting grain size of $Mg_2Si$ became approximately 30 $\mu$m or more. The unreacted Si grains, contained in the solid bodies S-8 to S-10, were also set to approximately 30 $\mu$m or more. Therefore, it is considered that, even when the solid bodies S-8 to S-10 are then subjected to the heating process and warm plasticization treatment process, the grain size of the resulting $Mg_2Si$ becomes approximately 30 $\mu$m or more, depending on the unreacted Si grain size.

Industrial Applicability

Since the magnesium-base composite material of the present invention has high strength, high abrasion resistance and high corrosion resistance in addition to its light-weight property, it is applicable to structural part materials, such as car parts and electric appliance parts, in which these properties are simultaneously demanded, as well as medical and welfare tools and protective tools such as caring beds, wheel chairs, canes and go-carts.

Moreover, the magnesium-base composite powder used in the manufacturing method of the present invention is applicable in the following manner: the powder is subjected to a plastic treatment such as pressing-compressing/rolling processes at normal temperature or a warm temperature, while being placed on a magnesium alloy plate, and then subjected to the heating step used in the present invention so that a clad plate member in which the magnesium-base composite powder of the present invention is contact-bonded to the magnesium alloy plate is formed. In other words, the clad plate member in which $Mg_2Si$ particles are dispersed only in the surface of the magnesium alloy plate, with the $Mg_2Si$ particles being firmly joined to the magnesium alloy plate, can be prepared. This clad plate member has excellent corrosion resistance and abrasion resistance because of the $Mg_2Si$ grains that have been evenly dispersed, and suitably applied to structural parts such as light-weight pipes.

Furthermore, the magnesium-base composite material of the present invention is subjected to secondary and/or tertiary processes such as cutting, forging, bending and joining processes, if necessary, to form the following products. With respect to products to which the magnesium-base composite material of the present invention is applicable, examples thereof include a wide range of products as shown below, and it is applicable to those products to which aluminum alloys have been conventionally applied.

(1) Raw materials, intermediate products, finished products and assembled products

Raw materials, intermediate products, finished products and assembled products formed by various processes, such as welding, fusion welding, brazing, bonding, thermal cutting, thermal processing, forging, extruding, drawing, rolling, shearing, plate molding, roll molding, form rolling, spinning, bending, leveling, high-energy speed machining, powder machining, various cutting processes and grinding processes; and composite products in which these products are combined with other material products. Raw materials, intermediate products, finished products and assembled products that have been subjected to various surface treatments such as metal coating, chemical conversion coating, surface curing, non-metal coating and painting, and composite products in which these products are combined with other material products.

(2) Parts for transport equipment

(2-1) Car and motorcycle parts: transmission parts such as a valve spool and a bearing. Engine parts such as a tappet, a lifter and a retainer. Interior parts such as a handle.
(2-3) Parts for railroad vehicle: large-size screws and large-size bolts.

(3) Parts for electric appliance

(3-1) Parts for audio-visual equipment: parts for an amplifier, a video player, a cassette player, a CD player and an LD player, such as an adjustment thumb screw, legs, a chassis and a speaker corn.
(3-2) Parts for domestic electric appliance: washing-machine parts, such as a casing and a washer vessel.
(3-3) Sewing machines and parts for sewing machine: for example, sewing machine arms.

(4) Housing products

(4-1) Interior products: living-room products such as chandelier parts, illumination parts and decorative ornaments. Furniture parts such as chair legs, table legs, a table plate, hinges, handles, rails, and adjusting screws for shelves.

(5) Parts for precision machine

(5-1) Optical equipment and measuring-instrumentation parts: parts for cameras, telescopes, microscopes and electron microscopes, such as a body, a mount and a lens case.
(5-2) Parts for watch: parts for wrist watches, clocks and clocks to stand on a table, etc., such as a body, chenille, gears and a pendulum.

(6) Sports products and weapons

Golf club parts such as a shaft, a head, a toe, a heal and a sole. Bicycle products such as a transmission gear, a frame and a handle.

(7) Medical instruments

Bed frames, therapeutic tool parts and the like.

(8) Welfare caring tool and parts for welfare caring tool

Wheel chairs, caring beds, parts therefor and the like.

**Claims**

1.  A magnesium-base composite material comprising magnesium silicide ($Mg_2Si$) dispersed in a matrix containing magnesium (Mg), the magnesium-base composite material having an amount of Si of not less than 2 parts by weight to not more than 10 parts by weight and an amount of $Mg_2Si$ of not less than 3 parts by weight to not more than 27.5 parts by weight, with respect to 100 parts by weight of the magnesium-base composite material, and having a tensile strength of not less than 100 MPa to not more than 500 MPa.

2.  A magnesium-base composite material comprising magnesium silicide ($Mg_2Si$) dispersed in a matrix containing magnesium (Mg), the magnesium-base composite material having an amount of Si of not less than 2 parts by weight to not more than 10 parts by weight and an amount of $Mg_2Si$ of not less than 3 parts by weight to not more than 27.5 parts by weight, with respect to 100 parts by weight of the magnesium-base composite material, and having a tensile strength of more than 350 MPa to not more than 500 MPa.

3.  The magnesium-base composite material according to claim 1 or 2, wherein $Mg_2Si$ is dispersed in the composite material as grains, and has a grain size of not less than 10 nm to not more than 30 $\mu$m.

4.  The magnesium-base composite material according to claim 3, wherein $Mg_2Si$ has a grain size of not less than 100 nm to not more than 10 $\mu$m.

5. The magnesium-base composite material according to any of claims 1 to 4, wherein said magnesium-base composite material further comprises magnesium oxide (MgO) and/or silica ($SiO_2$).

6. The magnesium-base composite material according to any of claims 1 to 5, wherein said magnesium-base composite material has a Micro Vickers hardness (Hv) of 80 to 125.

7. The magnesium-base composite material according to any of claims 1 to 6, wherein said magnesium-base composite material has a Rockwell hardness (E scale)(HRE) of 40 to 120.

8. The magnesium-base composite material according to any of claims 1 to 7, wherein said magnesium-base composite material has a rigidity of 47 to 65 GPa.

9. A magnesium-base composite material comprising magnesium silicide ($Mg_2Si$) dispersed in a matrix containing magnesium (Mg), the magnesium-base composite material having at least one kind of characteristics selected from the following groups (A) and (B):

(A) said magnesium-base composite material has a Rockwell hardness (E scale) of not less than 40 to not more than 105, and/or said magnesium-base composite material has a Rockwell hardness (E scale) greater than that of a base material obtained by removing the magnesium silicide from said magnesium-base composite material by a value of not less than 20 to not more than 80; and
(B) said magnesium-base composite material has a tensile strength of not less than 100 MPa to not more than 350 MPa, and/or said magnesium-base composite material has a tensile strength greater than that of said base material by a value of not less than 20 MPa to not more than 100 MPa.

10. A magnesium-base composite material comprising magnesium silicide ($Mg_2Si$) dispersed in a matrix containing magnesium (Mg), the magnesium-base composite material having a tensile strength of not less than 100 MPa to not more than 350 MPa.

11. The magnesium-base composite material according to claim 10, wherein said magnesium-base composite material has a Rockwell hardness (E scale) of not less than 40 to not more than 105.

12. A magnesium-base composite material comprising magnesium silicide ($Mg_2Si$) dispersed in a matrix containing magnesium (Mg), the magnesium-base composite material having a Rockwell hardness (E scale) of not less than 40 to not more than 105.

13. The material according to any of claims 9 to 12, wherein said $Mg_2Si$ is set to not less than 3 wt% with respect to 100 wt% of said magnesium-base composite material.

14. A magnesium-base composite material comprising magnesium silicide ($Mg_2Si$) dispersed in a matrix containing magnesium (Mg), the magnesium-base composite material having at least one kind of characteristics selected from the following groups (A) and (B):

(A) said magnesium-base composite material has a Rockwell hardness (E scale) of not less than 40 to not more than 95, and/or said magnesium-base composite material has a Rockwell hardness (E scale) greater than that of a base material obtained by removing the magnesium silicide from said magnesium-base composite material by a value of not less than 20 to not more than 40; and
(B) said magnesium-base composite material has a tensile strength of not less than 100 MPa to not more than 280 MPa, and/or said magnesium-base composite material has a tensile strength greater than that of said base material by a value of not less than 20 MPa to not more than 50 MPa.

15. A magnesium-base composite material comprising magnesium silicide ($Mg_2Si$) dispersed in a matrix containing magnesium (Mg), the magnesium-base composite material having a tensile strength of not less than 100 MPa to not more than 280 MPa.

16. The magnesium-base composite material according to claim 15, wherein said magnesium-base composite material has a Rockwell hardness (E scale) of not less than 40 to not more than 95.

17. A magnesium-base composite material comprising magnesium silicide ($Mg_2Si$) dispersed in a matrix containing magnesium (Mg), the magnesium-base composite material having a Rockwell hardness (E scale) of not less than 40 to not more than 95.

18. The material according to any of claims 14 to 17, wherein said $Mg_2Si$ is set to not less than 3 wt% with respect to 100 wt% of said magnesium-base composite material.

19. The magnesium-base composite material according to any of claims 9 to 18, wherein $Mg_2Si$ is dispersed in the composite material as grains, and has a grain size of not less than 10 nm to not more than 30 $\mu$m.

20. The magnesium-base composite material according to claim 19, wherein $Mg_2Si$ has a grain size of not less than 100 nm to not more than 10 $\mu$m.

21. The magnesium-base composite material according to any of claims 9 to 20, wherein Si is set to not less than 2 parts by weight to not more than 10 parts by weight with respect to 100 parts by weight of said magnesium-base composite material.

22. The magnesium-base composite material according to any of claims 9 to 21, wherein $Mg_2Si$ is set to not less than 3 parts by weight to not more than 27.5 parts by weight with respect to 100 parts by weight of said magnesium-base composite material.

23. The magnesium-base composite material according to any of claims 9 to 22, said magnesium-base composite material further comprises magnesium oxide (MgO) and/or silica ($SiO_2$).

24. The magnesium-base composite material according to any of claims 9 to 23, wherein said magnesium-base composite material has a Micro Vickers hardness (Hv) of 80 to 125.

25. The magnesium-base composite material according to any of claims 9 to 24, wherein said magnesium-base composite material has a rigidity of 47 to 65 GPa.

26. A product made of the magnesium-base composite material according to any of claims 1 to 25.

27. The product according to claim 26, selected from the group consisting of: a raw material, an intermediate product, a finished product and an assembled product; a part for transport equipment; a part for electric appliance; a housing product; a part for precision machine; a sports product and a weapon; a medical instrument; and a welfare caring tool.

28. A manufacturing method of a magnesium-base composite material comprising magnesium silicide ($Mg_2Si$) dispersed in a matrix containing magnesium (Mg), the method comprising the steps of:

   (a) blending a first material containing Mg and a second material containing Si at a predetermined ratio to prepare a blended powder;
   (b) performing a plastic treatment on the resulting blended powder to form a solid body;
   (c) heating the solid body to allow Mg and Si to react with each other, thereby forming a heat solid body containing $Mg_2Si$; and
   (d) performing a warm plasticization treatment on said heat solid body.

29. The method according to claim 28, wherein said composite material has a tensile strength of not less than 100 MPa to not more than 500 MPa.

30. The method according to claim 28, wherein said composite material has a tensile strength of not less than 100 MPa to not more than 350 MPa.

31. The method according to claim 28, wherein said composite material has a tensile strength of greater than 350 MPa and not more than 500 MPa.

32. The method according to any of claims 28 to 31, wherein in said solid body forming step (b), the blended powder is mixed powder of a first material and a second material, and a container is filled with the mixed powder and a pressure is applied thereto, thereby obtaining said solid body as a compressed powder molded body having a void content of not more than 35%.

33. The method according to any of claims 28 to 31, wherein in said solid body forming step (b), said blended powder is prepared as an aggregation of composite powder formed by dispersing Si in matrix powder containing Mg, and a container is filled with the aggregation of composite powder and a pressure is applied thereto, thereby obtaining said solid body as a compressed powder molded body.

34. The method according to any of claims 28 to 31, wherein in said solid body forming step (b), after filling a metal mold or a container with said blended powder, said blended powder is subjected to a compressing deformation process, an extruding deformation process or a backward extruding process, or a desired combination of these processes, each material of said blended powder is mixed and/or ground, and then a pressure is applied thereto, thereby obtaining said solid body.

35. The method according to any of claims 28 to 34, wherein in said solid body forming step (b), the blended matter is subjected to a plastic treatment to form a solid body containing $Mg_2Si$ grains having a grain size of not less than 10 nm to not more than 30 $\mu$m or $Mg_2Si$ grains having a grain size of not less than 10 nm to not more than 30 $\mu$m and a second sample having a grain size of not less than 10 nm to not more than 30 $\mu$m.

36. The method according to any of claims 28 to 35, further comprising the step of, after said warm plasticization treatment step, (e) re-heating the resulting substance.

37. The method according to any of claims 28 to 36, wherein said warm plasticization treatment step is performed by using a warm extruding process or a warm forging process.

38. The method according to any of claims 28 to 36, wherein said warm plasticization treatment step is performed by using a warm extruding process.

39. The method according to any of claims 28 to 36, wherein said warm plasticization treatment step is performed by using a warm forging process.

40. The method according to any of claims 28 to 39, wherein a heating temperature in said heating step is set to not less than 150°C to less than 650°C, preferably not less than 150°C to not more than 600°C, more preferably not less than 150°C to not more than 520°C.

41. The method according to any of claims 28 to 39, wherein a heating temperature in said heating step is set to not less than 350°C to less than 650°C, preferably not less than 350°C to not more than 600°C, more preferably not less than 350°C to not more than 520°C.

42. The method according to any of claims 28 to 39, wherein a heating temperature in said heating step is set to not less than 150°C to less than 350°C.

43. The method according to any of claims 36 to 42, wherein a heating temperature in said re-heating step is set to not less than 150°C to less than 650°C, preferably not less than 150°C to not more than 600°C, more preferably not less than 150°C to not more than 520°C.

44. The method according to any of claims 36 to 42, wherein a heating temperature in said re-heating step is set to not less than 350°C to less than 650°C, preferably not less than 350°C to not more than 600°C, more preferably not less than 350°C to not more than 520°C.

45. The method according to any of claims 36 to 42, wherein a heating temperature in said re-heating step is set to not less than 150°C to less than 350°C.

46. The method according to any of claims 28 to 45, wherein said magnesium-base composite material has a Micro Vickers hardness of 80 to 125.

47. The method according to any of claims 28 to 46, wherein said magnesium-base composite material has a Rockwell hardness (E scale) (HRE) of 40 to 120.

**48.** The method according to any of claims 28 to 47, wherein $Mg_2Si$ contained in said magnesium-base composite material has a grain size of not less than 10 nm to not more than 30 µm.

**49.** The method according to claim 48, wherein $Mg_2Si$ contained in the magnesium-base composite material has a grain size of not less than 100 nm to not more than 10 µm.

**50.** The method according to any of claims 28 to 49, wherein an amount of Si contained in said magnesium-base composite material is set to not less than 2.5 parts by weight to not more than 10 parts by weight with respect to 100 parts by weight of the material.

**51.** The method according to any of claims 28 to 50, wherein said magnesium-base composite material further comprises magnesium oxide (MgO) and/or silica ($SiO_2$).

**52.** The method according to any of claims 28 to 51, wherein said magnesium-base composite material has a rigidity of 47 to 65 GPa.

**53.** The method according to any of claims 28 to 52, wherein an amount of $Mg_2Si$ contained in said magnesium-base composite material is set to not less than 3 parts by weight to not more than 27.5 parts by weight with respect to 100 parts by weight of the material.

FIG. 1

Mg powder

Si powder

FIG. 2

void content : 9%

void content : 19%

void content : 32%

650℃

heat-generation

void content : 52%

100   200   300   400   500   600   700

temperature (℃)

FIG. 3

Si particle

Mg matrix

FIG. 4

10 μ m

FIG. 5

FIG. 6

## FIG. 7

(b)  (c')  (d')

(f')  (e')

## FIG. 8

(a)  (b)  (c)

### INTERNATIONAL SEARCH REPORT

| International application No. |
| --- |
| PCT/JP02/09502 |

**A. CLASSIFICATION OF SUBJECT MATTER**
Int.Cl$^7$ C22C1/04

According to International Patent Classification (IPC) or to both national classification and IPC

**B. FIELDS SEARCHED**

Minimum documentation searched (classification system followed by classification symbols)
Int.Cl$^7$ C22C1/04-1/05, 1/09-1/10, 23/00-23/06

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | Masayoshi KONDO et al., "Koso Goseiho o Riyo shita $Mg_2Si$ Bunsan Keikinzoku Zairyo no Sakusei", Japan Society of Powder and Powder Metallurgy Koen Gaiyoshu, 22 May, 2001 (22.05.01), Heisei 3 nendo Shunki, page 154 | 1-53 |
| Y | Hideki OGINUMA et al., "$Mg_2Si$ no Koso Gosei ni Oyobosu Genryo Funmatsu no Eikyo", Japan Society of Powder and Powder Metallurgy Koen Gaiyoshu, 22 May, 2001 (22.05.01), Heisei 13 nendo Shunki, page 152 | 1-53 |
| Y | Masayoshi KONDO et al., "$Mg_2Si$ Kinzokukan Kagobutsu no Koso Gosei ni Oyobosu Seikei Atsuryoku no Eikyo", Japan Society of Powder and Powder Metallurgy Koen Gaiyoshu, 22 May, 2001 (22.05.01), Heisei 13 nendo Shunki, page 153 | 1-53 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 December, 2002 (06.12.02) | 24 December, 2002 (24.12.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

| INTERNATIONAL SEARCH REPORT | International application No. |
|---|---|
| | PCT/JP02/09502 |

**C (Continuation). DOCUMENTS CONSIDERED TO BE RELEVANT**

| Category* | Citation of document, with indication, where appropriate, of the relevant passages | Relevant to claim No. |
|---|---|---|
| Y | Masayoshi KONDO et al., "Bulk Mechanical Alloying ni yori Sakusei shita Mg-33. 3at%Si Funmatsu no Hanno Seisei Kyodo", Japan Society of Powder and Powder Metallurgy Koen Gaiyoshu, 18 October, 2000 (18.10.00), Heisei 12 nendo Shuki, page 156 | 1-53 |
| Y | JP 6-81068 A (Honda Motor Co., Ltd.), 22 March, 1994 (22.03.94), Claims; page 2, column 1, line 38 to column 2, line 9; table 1 (Family: none) | 1-53 |
| A | JP 3035615 B1 (Director General, Agency of Industrial Science and Technology), 24 April, 2000 (24.04.00), (Family: none) | 1-53 |
| A | JP 2000-54009 A (Yazaki Corp.), 22 February, 2000 (22.02.00), (Family: none) | 1-53 |

Form PCT/ISA/210 (continuation of second sheet) (July 1998)